(19) **Europäisches Patentamt / European Patent Office / Office européen des brevets**

(11) **EP 4 786 525 A1**

(12) # EUROPEAN PATENT APPLICATION
published in accordance with Art. 153(4) EPC

(43) Date of publication:
**05.08.2026 Bulletin 2026/32**

(21) Application number: **24871694.6**

(22) Date of filing: **29.08.2024**

(51) International Patent Classification (IPC):
*C08G 81/00* (2006.01)   *C08G 63/688* (2006.01)
*C08K 3/16* (2006.01)   *C08K 3/105* (2018.01)
*C08L 67/00* (2006.01)   *C08L 71/00* (2006.01)
*C08L 75/04* (2006.01)   *C08L 77/00* (2006.01)
*C08L 101/00* (2006.01)   *C08L 101/02* (2006.01)
*C08L 101/16* (2006.01)

(52) Cooperative Patent Classification (CPC):
**C08G 63/688; C08G 81/00; C08K 3/105;
C08K 3/16; C08L 67/00; C08L 71/00; C08L 75/04;
C08L 77/00; C08L 101/00; C08L 101/02;**
C08L 101/16

(86) International application number:
**PCT/JP2024/030834**

(87) International publication number:
**WO 2025/069893 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023   JP 2023161795**

(71) Applicant: **Nisshinbo Holdings, Inc.
Tokyo 103-8650 (JP)**

(72) Inventors:
• **UEMURA, Naohiro**
  **Chiba 2670056 (JP)**
• **SASAKI, Kenta**
  **Chiba 2670056 (JP)**
• **HAYAKAWA, Kazutoshi**
  **Chiba 2670056 (JP)**
• **HASHIBA, Toshifumi**
  **Chiba 2670056 (JP)**

(74) Representative: **Mewburn Ellis LLP
Aurora Building
Counterslip
Bristol BS1 6BX (GB)**

(54) **CROSSLINKED MARINE BIODEGRADABLE POLYMER COMPOUND COMPRISING DIFFERENT ANIONIC POLYMER COMPOUNDS, AND METHOD FOR PRODUCING SAME**

(57)    Provided is a marine biodegradable polymer compound which has a main chain that is linear or branched, which has a total of two or more monovalent anionic groups at terminals of the main chain, and in which are bonded, via a divalent or polyvalent metal cation, an anionic polymer compound A that has no ionic group in a side chain and an anionic polymer compound B that has a monovalent anionic group in a side chain of two or more repeating units.

**Description**

TECHNICAL FIELD

The present invention relates to a crosslinked marine biodegradable polymer compound including different anionic polymer compounds, and a method for producing the same.

BACKGROUND ART

In recent years, environmental pollution (marine pollution) by microplastics and adverse effects of microplastics on ecosystems have become a problem, and various efforts to reduce environmental load have started. Among them, development and widespread adoption of biodegradable resins have attracted attention.

Although general biodegradable resins exhibit high biodegradability in environments where there are many microorganisms responsible for decomposition, such as soil and sludge, the biodegradable resins have a disadvantage that they are difficult to decompose in environments where the concentration of microorganisms is very low, such as in the ocean (Non-Patent Document 1). It has also been found that even for resins reported to be biodegradable in the ocean, such as polycaprolactone (PCL) and polyhydroxyalkanoic acid (PHA), the decomposition rate varies greatly depending on the type of seawater, and it has been reported that the decomposition rate is affected by various factors such as the presence or absence and the number of decomposing bacteria in seawater, the salt concentration, the pH, the water temperature, the dissolved oxygen concentration, and the amount of dissolved organic carbon (Non-Patent Document 2).

Starch-based resins have also been put into practical use and put on the market as biodegradable resins. However, since a single starch material is greatly inferior in physical properties, most of the starch-based resins are in the form of a mixed composition with a polyester-based resin that is hardly biodegradable in the ocean, such as polybutylene adipate/terephthalate (PBAT) and polylactic acid (PLA). Therefore, also in the case of a starch-based resin, biodegradability in the ocean tends to be greatly reduced.

Under such circumstances, there is a demand for the development of a material that reliably decomposes in any type of seawater while maintaining physical properties, and a material that serves as a degradation promoter for resins hardly biodegradable in seawater and that reduces the environmental load.

PRIOR ART DOCUMENTS

NON-PATENT DOCUMENTS

Non-Patent Document 1 Hideshige Takada, "A Look at the Status of Microplastic Pollution Trends and Possible Solution Frameworks", Journal of the Japan Society of Material Cycles and Waste Management, Vol. 29, No. 4, pp. 261-269, 2018

Non-Patent Document 2: Akira Ebisui and 4 others, "Degradation of Biodegradable Plastics in Seawater", Fisheries Engineering, Vol. 40, No. 2, pp. 143-149, 2003

SUMMARY OF INVENTION

TECHNICAL PROBLEM

The present invention has been made in view of the above-mentioned circumstances, and an object of the invention is to provide a polymer compound that has excellent thermal/mechanical properties, and exhibits biodegradability in the ocean, and a marine biodegradable resin composition containing the polymer compound.

SOLUTION TO PROBLEM

As a result of intensive studies to solve the above-mentioned problem, the present inventors have found that the following marine biodegradable polymer compound has excellent thermal/mechanical properties, and exhibits high marine biodegradability: a marine biodegradable polymer compound in which an anionic polymer compound A which has a total of two or more monovalent anionic groups at terminals of a main chain and no ionic group in a side chain and in which the main chain is linear or branched and an anionic polymer compound B having a monovalent anionic group in side chains of two or more repeat units are bonded via a divalent or higher-valent metal cation.

Further, the present inventors have found that when the present material is used in combination with a resin, particularly a biodegradable resin, the present material is primarily decomposed in seawater prior to the resin, and the following effects are obtained: (1) pores are formed in the resin material and the specific surface area of the resin is increased, and the growth of microorganisms responsible for decomposition is promoted, and (2) the secondary decomposition, that is, the biodegradation by microorganisms is promoted by the primary decomposition. The present inventors have found that the biodegradation of the resin material in the ocean can be consequently promoted, and have completed the present invention.

That is, the present invention provides the following marine biodegradable polymer compound and a method for producing the same.

1. A marine biodegradable polymer compound in which an anionic polymer compound A which has a total of two or more monovalent anionic groups at a terminal of a main chain and no ionic group in a side chain and in which the main chain is linear or branched and an anionic polymer compound B having a monovalent anionic group in side chains of two or more repeat units are bonded via a divalent or higher-valent metal cation.

2. The polymer compound according to item 1, wherein a weight ratio of the anionic polymer compound A to the anionic polymer compound B is 99 : 1 to 10 : 90.

3. The polymer compound according to item 1 or 2, wherein the main chain of the anionic polymer compound A is linear.

4. The polymer compound according to any one of items 1 to 3, wherein the anionic polymer compound B contains a repeat unit having no ionic group.

5. The polymer compound according to any one of items 1 to 4, wherein the anionic polymer compound B has an aliphatic unsaturated carbon-carbon bond in a main chain thereof.

6. The polymer compound according to any one of items 1 to 5, wherein the monovalent anionic group of the anionic polymer compound A is a carboxylate anion.

7. The polymer compound according to any one of items 1 to 6, wherein the monovalent anionic group of the anionic polymer compound B is a carboxylate anion or a sulfonate anion.

8. The polymer compound according to any one of items 1 to 7, wherein the monovalent anionic group of the anionic polymer compound B is bonded to a ring.

9. The polymer compound according to any one of items 1 to 8, wherein a number average molecular weight of the anionic polymer compound A is 500 to 10,000, and a number average molecular weight of the anionic polymer compound B is 500 to 10,000.

10. The polymer compound according to any one of items 1 to 9, wherein the anionic polymer compound A is a compound in which repeat units are bonded by at least one bond selected from an ester bond, an amide bond, an ether bond and a urethane bond, and the anionic polymer compound B is a compound in which repeat units are bonded by at least one bond selected from an ester bond, an amide bond, an ether bond and a urethane bond.

11. The polymer compound according to any one of items 1 to 10, wherein a value obtained by dividing the number average molecular weight of the anionic polymer compound B by an average number of monovalent anionic groups in one molecule is 100 to 5,000.

12. The polymer compound according to any one of items 1 to 11, wherein a content of the divalent or higher-valent metal cation is 1 to 300 eq/$10^5$ g.

13. The polymer compound according to any one of items 1 to 12, wherein the divalent or higher-valent metal cation is a calcium ion, a magnesium ion, or an aluminum ion.

14. A marine biodegradation promoter including the marine biodegradable polymer compound according to any one of items 1 to 13.

15. A marine biodegradable resin composition containing the marine biodegradation promoter according to item 14 and a resin.

16. The marine biodegradable resin composition according to item 15, wherein the resin is a biodegradable resin.

17. The marine biodegradable resin composition according to item 15 or 16, having a content of the marine biodegradation promoter of 1 to 50 wt%, and a content of the resin of 50 to 99 wt%.

18. A molded body obtained from the marine biodegradable resin composition according to any one of items 15 to 17.

19. A method for producing a marine biodegradable polymer compound, the method including a step of cross-linking an anionic polymer compound A which has a total of two or more monovalent anionic groups at a terminal of a main chain and no ionic group in a side chain and in which the main chain is linear or branched and an anionic polymer compound B having a monovalent anionic group in side chains of two or more repeat units, by a divalent or higher-valent metal cation.

ADVANTAGEOUS EFFECTS OF INVENTION

Since the marine biodegradable polymer compound of the present invention is a crosslinked body in which an anionic polymer compound having a monovalent anionic group at a terminal and an anionic polymer compound having a monovalent anionic group in a side chain of a repeat unit are crosslinked via a metal cation, the marine biodegradable polymer compound can exhibit both thermal/mechanical properties and marine biodegradability. In addition, the marine biodegradable polymer compound, when coming into contact with seawater, gradually dissolves in seawater or exhibits hydrophilicity. Therefore, biodegradation of a resin composition or a molded body containing the marine biodegradable polymer compound is promoted in the ocean, and the resin composition and the molded body are useful for countermeasures against marine pollution. Since the marine biodegradable polymer compound has marine biodegradability, biodegradation of a composition or a molded body containing the marine biodegradable polymer compound is promoted in the ocean, and the composition and the molded body are useful for countermeasures against marine pollution. Use of the marine biodegradation promoter containing the marine biodegradable polymer compound of the present invention can provide an environmentally friendly composition or molded body.

DESCRIPTION OF EMBODIMENTS

[Marine biodegradable polymer compound]

The marine biodegradable polymer compound of the present invention is one in which an anionic polymer compound A which has a total of two or more monovalent anionic groups at a terminal of a main chain and no ionic group in a side chain and in which the main chain is linear or branched and an anionic polymer compound B having a monovalent anionic group in side chains of two or more repeat units are bonded via a divalent or higher-valent metal cation. In the present invention, the "main chain" means a molecular chain forming a backbone of a polymer structure. The main chain may have a ring structure inside the main chain. The "side chain" means a substituent bonded to a main chain.

In the marine biodegradable polymer compound of the present invention, the weight ratio of the anionic polymer compound A to the anionic polymer compound B is preferably A : B = 99 : 1 to 10 : 90, more preferably 95 : 15 to 15 : 85, and still more preferably 90 : 10 to 20 : 80. When the weight ratio of the anionic polymer compound A to the anionic polymer compound B is in the above-mentioned range, both the softness derived from the anionic polymer compound A and the thermal properties and mechanical properties derived from the anionic polymer compound B can be achieved, and good biodegradability is obtained.

The anionic polymer compound A may be linear or branched. From the viewpoint of the thermal/mechanical properties of the polymer compound after crosslinking, it is preferable that the anionic polymer compound A is linear or branched, and has a total of 2 to 10 monovalent anionic groups at a terminal of the main chain, and more preferably has a total of 2 to 4 monovalent anionic groups at a terminal of the main chain, and it is still more preferable that the anionic polymer compound A is linear, and has a total of two monovalent anionic groups at a terminal of the main chain.

The anionic polymer compound B may contain a repeat unit having no ionic group, in addition to a repeat unit having a monovalent anionic group, as long as the anionic polymer compound B has a monovalent anionic group in two or more repeat units. At this time, the arrangement of the monomers of the anionic polymer compound B is not particularly limited, and the anionic polymer compound B may be any of a random copolymer, an alternating copolymer, a block copolymer, and the like. The anionic polymer compound B may be linear or branched, but is preferably linear from the viewpoint of the thermal/mechanical properties of the polymer compound after crosslinking.

The anionic polymer compound B may have an aliphatic unsaturated carbon-carbon bond in the main chain. At this time, the number of aliphatic unsaturated carbon-carbon bonds is, on average, preferably 0.1 to 50, more preferably 0.5 to 25, and still more preferably 1 to 10 per molecule for achieving both the strength and biodegradability.

From the viewpoint of physical properties and safety, the monovalent anionic group contained in the anionic polymer compound A is preferably a carboxylate anion, a sulfonate anion or a phosphate anion, more preferably a carboxylate anion or a sulfonate anion, and still more preferably a carboxylate anion. The monovalent anionic groups contained in the anionic polymer compound A may be the same or different from each other.

From the viewpoint of physical properties and safety, the monovalent anionic group contained in the anionic polymer compound B is preferably a carboxylate anion, a sulfonic acid anion or a phosphate anion, more preferably a carboxylate anion or a sulfonate anion, and still more preferably a sulfonate anion. The monovalent anionic groups contained in the anionic polymer compound B may be the same or different from each other.

The monovalent anionic group contained in the anionic polymer compound B may be directly bonded to the main chain or bonded to the main chain via a linking group. In consideration of thermal/mechanical properties, the monovalent anionic group is preferably directly bonded to the main chain, or bonded to the main chain via a linking group having 1 to 25 atoms, and more preferably directly bonded to the main chain. When the monovalent anionic group is directly bonded to the main chain, it is still more preferable that the main chain contains a ring, and the monovalent anionic group is bonded to the ring. The ring may be an alicyclic ring or an aromatic ring, but is preferably an aromatic ring. The ring may be composed of only carbon atoms or may be a heterocyclic ring containing other atoms, but is preferably composed of only carbon atoms. When the monovalent anionic group is bonded via a linking group, the structure of the linking group may be linear, branched, or cyclic, but is preferably linear or branched, and more preferably linear. The atoms that constitute the linking group are not particularly limited. Carbon, oxygen, nitrogen, boron, sulfur, phosphorus, and silicon are preferable, and carbon, oxygen, nitrogen, and sulfur are more preferable.

The molecular weight of the anionic polymer compound A is not particularly limited, but from the viewpoint of thermal/mechanical properties and biodegradability, the anionic polymer compound A preferably has a number average molecular weight of 200 to 100,000, more preferably has a number average molecular weight of 300 to 50,000, and still more preferably has a number average molecular weight of 500 to 10,000.

The molecular weight of the anionic polymer compound B is not particularly limited, but from the viewpoint of thermal/mechanical properties and biodegradability, the anionic polymer compound B preferably has a number average molecular weight of 200 to 100,000, more preferably has a number average molecular weight of 300 to 50,000, and still more preferably has a number average molecular weight of 500 to 10,000.

From the viewpoint of the thermal/mechanical properties of the polymer compound after crosslinking, a value obtained by dividing the number average molecular weight of the anionic polymer compound B by the average number of monovalent anionic groups in one molecule is preferably 100 to 5,000, more preferably 200 to 3,000, and still more preferably 300 to 1,000. One repeat unit may contain two or more monovalent anionic groups, and one kind, or two or more kinds of, each of a repeat unit having a monovalent anionic group and a repeat unit having no monovalent anionic group may be contained.

It is possible to further improve thermal/mechanical properties depending on the way of combining the anionic polymer compound A and the anionic polymer compound B. Specifically, the sum of a weighted average according to the weight ratio of the number average molecular weight of the anionic polymer compound A component contained in the marine biodegradable polymer compound and the weighted average according to the weight ratio of the number average molecular weight of the anionic polymer compound B component is preferably 500 to 50,000, more preferably 1000 to 30,000, still more preferably 1,500 to 10,000, and most preferably 2,000 to 8,000.

Here, as to the way of combining the anionic polymer compound A and the anionic polymer compound B, it is preferable to combine the anionic polymer compound A having a number average molecular weight of 200 to 20,000 and the anionic polymer compound B having a number average molecular weight of 300 to 30,000, it is more preferable to combine the anionic polymer compound A having a number average molecular weight of 500 to 10,000 and the anionic polymer compound B having a number average molecular weight of 500 to 20,000, and it is still more preferable to combine the anionic polymer compound A having a number average molecular weight of 500 to 3,000 and the anionic polymer compound B having a number average molecular weight of 1,500 to 5,000.

From the viewpoint of thermal/mechanical properties and biodegradability, the anionic polymer compound A is preferably a compound in which repeat units are bonded by at least one bond selected from an ester bond, an amide bond, an ether bond and a urethane bond, more preferably a compound in which repeat units are bonded by an ester bond or an amide bond, and still more preferably a compound in which repeat units are bonded by an ester bond. From the viewpoint of thermal/mechanical properties and biodegradability, the repeat unit is preferably an aliphatic or an aromatic having 1 to 20 carbon atoms, or a combination thereof, more preferably an aliphatic or an aromatic having 1 to 10 carbon atoms, or a combination thereof, and still more preferably an aliphatic having 1 to 10 carbon atoms.

From the viewpoint of thermal/mechanical properties and biodegradability, the anionic polymer compound B is preferably a compound in which repeat units are bonded by at least one bond selected from an ester bond, an amide bond, an ether bond and a urethane bond, more preferably a compound in which repeat units are bonded by an ester bond or an amide bond, and still more preferably a compound in which repeat units are bonded by an ester bond. From the viewpoint of thermal/mechanical properties and biodegradability, the repeat unit is preferably an aliphatic or an aromatic having 1 to 20 carbon atoms, or a combination thereof, more preferably an aliphatic or an aromatic having 1 to 10 carbon atoms, or a combination thereof, and still more preferably a combination of an aliphatic and an aromatic having 1 to 10 carbon atoms.

As for the anionic polymer compound A, the degree of biodegradability relative to cellulose is preferably 40% or more, more preferably 50% or more, still more preferably 60% or more, and most preferably 80% or more. In the present invention, the degree of biodegradation relative to cellulose is the maximum degree of degradation with respect to the maximum degree of degradation of cellulose within 2 years after immersion in seawater. The degree of biodegradation relative to cellulose can be measured by ASTM D6691, a known marine biodegradation test method, or the like, and BOD modified with reference thereto.

As for the anionic polymer compound B, the degree of biodegradability relative to cellulose is preferably 40% or more, more preferably 50% or more, still more preferably 60% or more, and most preferably 80% or more.

The anionic polymer compound A preferably has a softening point or a melting point. The anionic polymer compound A is preferably solid or liquid at room temperature. Specifically, the lower limit of the softening point or melting point is preferably -80°C or higher, -40°C or higher, 0°C or higher, 40°C or higher, and 80°C or higher in this order, and the upper limit is preferably 180°C or lower, 150°C or lower, and 120°C or lower in this order. In consideration of handleability, the anionic polymer compound A preferably has a softening point or melting point within a range of -80 to 180°C, and more preferably within a range of -40 to 120°C.

The anionic polymer compound B preferably has a softening point or a melting point. The anionic polymer compound B is preferably solid or liquid at room temperature. Specifically, the lower limit of the softening point or melting point is preferably 0°C or higher, 25°C or higher, 40°C or higher, 80°C or higher, and 100°C or higher in this order, and the upper limit is preferably 180°C or lower, 150°C or lower, and 120°C or lower in this order. In consideration of handleability, the anionic polymer compound B preferably has a softening point or melting point within a range of 0 to 180°C, and more preferably within a range of 25 to 120°C.

The anionic polymer compound A preferably dissolves in water or a solvent miscible with water. More specifically, the anionic polymer compound A preferably dissolves in water or a solvent miscible with water at a concentration of 1 wt% or more, 5 wt% or more, 10 wt% or more, 20 wt% or more, 30 wt% or more and 50 wt % or more in this order. The water or solvent miscible with water may be cooled or heated.

The anionic polymer compound B preferably dissolves in water or a solvent miscible with water. More specifically, the anionic polymer compound B preferably dissolves in water or a solvent miscible with water at a concentration of 1 wt% or more, 5 wt% or more, 10 wt% or more, 20 wt% or more, 30 wt% or more and 50 wt % or more in this order. The water or solvent miscible with water may be cooled or heated.

Examples of the solvent miscible with water include lower alcohol-based solvents such as methanol, ethanol, 1-propanol and 2-propanol, and amphiphilic solvents such as acetone, acetonitrile, tetrahydrofuran (THF), dimethylformamide (DMF), dimethylsulfoxide (DMSO), and N-methylpyrrolidone (NMP). From the viewpoint of miscibility with water, solubility and handleability, ethanol, acetonitrile, THF, and NMP are preferable, and ethanol and acetonitrile are more preferable.

The method for producing the anionic polymer compound A is not particularly limited. The anionic polymer compound A can be produced by, for example, introducing the monovalent anionic group via a linking group into a compound which has a total of two or more active functional groups such as a hydroxy group, an amino group and a thiol group at a terminal of a main chain and no ionic group in a side chain and in which the main chain is linear or branched (hereinafter, also referred to as a polymer compound A).

As the polymer compound A, a commercially available product or a synthesized product can be used. Examples of the commercially available product include KURARAY POLYOL P-1010, P-2010, P-2020, P-2050, P-520, C-590 and F-1010 (manufactured by Kuraray Co., Ltd.), PLACCEL 210B, 220N and 308 (manufactured by Daicel Corporation), polypropylene glycol, Diol Type 1000, polypropylene glycol and Triol Type 300 (manufactured by FUJIFILM Wako Pure Chemical Corporation), and Poly(propylene glycol)bis(2-aminopropyl ether) 400, and Poly(propylene glycol)bis(2-aminopropyl ether) 2000 (manufactured by Sigma-Aldrich Japan). When the polymer compound A is synthesized, the polymer compound A can be obtained by, for example, selecting two or more appropriate raw materials from a divalent or higher-valent carboxylic acid, a divalent or higher-valent alcohol, a divalent or higher-valent amine, divalent or a higher-valent isocyanate, and the like, followed by polycondensation or a polyaddition reaction. For example, a polyester polyol can be obtained by polycondensation of a divalent or higher carboxylic acid and a divalent or higher alcohol, a polyamide polyamine can be obtained by polycondensation of a divalent or higher carboxylic acid and a divalent or higher amine, and a polyurethane polyol can be obtained by polyaddition of a divalent or higher isocyanate and a divalent or higher alcohol, but the combination is not limited thereto. Three or more raw materials having different functional groups may be used, or two or more different raw materials having the same functional group may be used at the same time. When a trivalent or higher-valent raw material is used, the total substance amount of trivalent or higher-valent raw materials is preferably 0.01 to 50 mol%, more preferably 0.05 to 30 mol%, and most preferably 0.1 to 15 mol% in all substances of the raw material. Here, instead of each raw material, a derivative thereof may be used for the purpose of allowing the reaction to easily proceed. In the reaction, a base catalyst such as diazabicycloundecene (DBU) or triethylamine, or a metal catalyst such as dibutyltin dilaurate or titanium tetraisopropoxide may be used.

Examples of the divalent or higher-valent carboxylic acid include oxalic acid, malonic acid, fumaric acid, maleic acid, succinic acid, adipic acid, sebacic acid, 1,2,3-propanetricarboxylic acid, aconitic acid, malic acid, citric acid, phthalic acid, isophthalic acid, terephthalic acid, 1,3,5-benzenetricarboxylic acid, 2,6-naphthalenedicarboxylic acid, biphenyldicarboxylic acid, trimetic acid, and pyromellitic acid.

Examples of the divalent or higher-valent alcohol include ethylene glycol, glycerol, 1,2-propanediol, 1,3-propanediol, 1,4-butanediol, 2-butene-1,4-diol, 1,2,3-butanetriol, 1,2,4-butanetriol, 1,5-pentanediol, 2,4-pentanediol, 1,2,5-pentanetriol, 2-hydroxy-2-ethyl-1,3-propanol, pentaerythritol, 1,2-cyclohexanediol, 1,3-cyclohexanediol, 1,4-cyclohexanediol, 1,3,5-cyclohexanetriol, 1,6-hexanediol, 2,5-hexanediol, 3-methyl-1,5-pentanediol, 1,7-heptanediol, 1,4-benzenedimethanol, 3,6-diazaoctane-1,8-diol, 2,6-dihydroxynaphthalene, 1,9-nonanediol, 1,10-decanediol, 1,11-undecanediol, 1,12-dodecanediol, 1,14-tetradecanediol, 1,16-hexadecanediol, 1,18-octadecanediol, phloroglucinol, pyrogallol, 1,2,4-benzenetriol, 4,4'-dihydroxybiphenyl, 4,4'-dihydroxydiphenylmethane, 4,4'-dihydroxydiphenyl ether, and polyethylene glycol.

Examples of the divalent or higher-valent amine include ethylenediamine, 1,2-diaminopropane, 1,3-diaminopropane, 1,4-butanediamine, 1,5-diaminopentane, 1,6-diaminohexane (hexamethylenediamine), 1,7-diaminoheptane, 1,8-diaminooctane, 1,10-diaminodecane, 1,12-diaminododecane, 3,3-diaminodipropylamine, tris(3-aminopropyl)amine, 3,3'-diaminobenzidine, 1,4-cyclohexadiamine, spermine, spermidine, triethylenetetramine, 1,4-phenylenediamine, 1,2-diphenylethylenediamine, and orthotolidine.

Examples of the divalent or higher-valent isocyanate include hexamethylene diisocyanate (HDI), pentamethylene diisocyanate (PDI), isophorone diisocyanate (IPDI), cyclohexane-1,4-diisocyanate, methylenebis(4-cyclohexyl isocyanate), toluene diisocyanate (TDI), diphenylmethane diisocyanate (MDI), polymeric MDI, xylene diisocyanate, and 1,4-phenylene diisocyanate.

As the anionic polymer compound B, a commercially available product or a synthesized product can be used. Examples of the commercially available product include Z-221 (manufactured by GOO CHEMICAL INDUSTRY CO., LTD.). When the anionic polymer compound B is synthesized, the anionic polymer compound B can be obtained by a polymerization reaction using a monomer having a monovalent anionic group or a functional group that can be converted into an anionic group by performing appropriate treatment, or a reaction of a polymer compound containing a repeat unit having a reactive site and a compound which is reactive with the reactive site, and has a monovalent anionic group or a functional group that can be converted into a monovalent anionic group by performing appropriate treatment (hereinafter, also referred to as a compound b).

Specific examples of the monomer include sodium 5-sulfoisophthalate, sodium 4-sulfoisophthalate, 4-sulfonaphthalene-2,6-dicarboxylic acid, monomethyl trimellitic acid, pyromellitic dianhydride, 4,4'-biphthalic anhydride, methacrylic acid, methyl methacrylate, and styrene sulfonic acid.

Examples of the polymerization reaction using the monomer include polycondensation and polyaddition of the monomer and a divalent or higher-valent carboxylic acid, a divalent or higher-valent alcohol, a divalent or higher-valent amine, a divalent or higher-valent isocyanate, or the like. The divalent or higher-valent carboxylic acid, the divalent or higher-valent alcohol, the divalent or higher-valent amine, and the divalent or higher-valent isocyanate are as described above. The polymerization reaction is preferably polycondensation of sodium 5-sulfoisophthalate, terephthalic acid and 1,4-butanediol, or polyaddition of pyromellitic dianhydride and hexamethylenediamine, for example. Here, instead of each raw material, a derivative thereof may be used for the purpose of allowing the reaction to easily proceed. In the reaction, a base catalyst such as DBU or triethylamine, or a metal catalyst such as dibutyltin dilaurate or titanium tetraisopropoxide may be used.

Examples of the polymer compound containing a repeat unit having a reactive site include unsaturated polymer compounds containing a repeat unit having an aliphatic unsaturated carbon-carbon bond, such as unsaturated polyester compounds, unsaturated polyamide compounds, and unsaturated polyurethane compounds. These unsaturated polymer compounds can be synthesized by using, together with the divalent or higher-valent carboxylic acid, divalent or higher-valent alcohol, divalent or higher-valent amine or divalent or higher-valent isocyanate, an unsaturated polycarboxylic acid such as maleic acid, fumaric acid, citraconic acid, mesaconic acid, 2-pentenedioic acid, methylenesuccinic acid, allylmalonic acid, isopropylidenesuccinic acid, 2,4-hexadienedioic acid or acetylenedicarboxylic acid, an unsaturated polyhydric alcohol such as 2-butene-1,4-diol or 3-hexene-1,6-diol, an unsaturated polyvalent amine such as 2-butene-1,4-diamine or 3-hexene-1,6-diamine or an unsaturated polyvalent isocyanate such as 2-butene-1,4-diisocyanate or 3-hexene-1,6-diisocyanate, or the like. Preferred examples include unsaturated polyesters obtained by polycondensation of maleic acid and 1,4-butanediol, and unsaturated polyamides obtained by polycondensation of sebacic acid, maleic acid and hexamethylenediamine. Here, instead of each raw material, a derivative thereof may be used for the purpose of allowing the reaction to easily proceed. In the reaction, a base catalyst such as DBU or triethylamine, or a metal catalyst such as dibutyltin dilaurate or titanium tetraisopropoxide may be used. In addition to the unsaturated polymer compound, a polymer compound having a radical site on a temporary basis in the system may be prepared by applying a radical initiator or radiation to a polyolefin-based polymer or a polyether-based polymer.

Examples of the compound that is reactive with an aliphatic unsaturated carbon-carbon bond, among the compounds b, include mercaptocarboxylic acids such as 3-mercaptopropionic acid, amino acids such as 5-aminovaleric acid and 6-aminohexanoic acid, aminosulfonic acids such as 2-aminoethanesulfonic acid, aminophosphoric acids such as ethanolamine phosphoric acid, nucleophilic organic acids such as malonic acid and organocopper ate complexes, and derivatives thereof in the case where the reaction with an unsaturated bond is a conjugated addition reaction, carboxylic acids and sulfonic acids having an unsaturated bond, such as acrylic acid, 3-pentenoic acid, carboxystyrene and styrenesulfonic acid in the case where the reaction with an unsaturated bond is a radical reaction, pyrrole carboxylic acids such as 1-methyl-2-pyrrole carboxylic acid in the case where the reaction with an unsaturated bond is a Diels-Alder reaction, and carboxylic acids having an unsaturated bond, such as acrylic acid and 3-pentenoic acid in the case where the reaction with an unsaturated bond is a photocyclization addition reaction. Examples of the compound that is reactive with a radical site, among compounds b, include carboxylic acids and sulfonic acids having an unsaturated bond, such as acrylic acid, 3-pentenoic acid, carboxystyrene and styrenesulfonic acid.

The reaction between the polymer compound containing a repeat unit having a reactive site and the compound b is not particularly limited, but in consideration of reactivity, selectivity, and physical properties and safety of a product, 3-mercaptopropionic acid, 5-aminovaleric acid, 6-aminohexanoic acid, and malonic acid derivatives are preferably used in the conjugated addition reaction, and 3-mercaptopropionic acid is most preferably used in the conjugated addition reaction. In the reaction described above, a commonly used catalyst may be used as necessary. Examples of the catalyst include base catalysts such as DBU and TEA in the conjugated addition reaction, transition metal catalysts such as an organoruthenium complex and an organotitanium complex in the radical reaction, Lewis acid catalysts such as ytterbium triflate and scandium triflate in the Diels-Alder reaction, and photosensitizers such as thiophene and benzophenone in the photocyclization addition reaction. Here, instead of each raw material, a derivative thereof may be used for the purpose of allowing the reaction to easily proceed.

[Marine biodegradable polymer compound]

The marine biodegradable polymer compound of the present invention is a compound in which the anionic polymer compound A and the anionic polymer compound B are bonded via a divalent or higher-valent metal cation.

The divalent or higher-valent metal cation is not particularly limited, and examples thereof include a calcium ion, a beryllium ion, a magnesium ion, a strontium ion, a barium ion, a zinc ion, an aluminum ion, an iron ion, a copper ion, a platinum ion, a gold ion, a titanium ion, a nickel ion, a cobalt ion, a manganese ion, a zirconium ion, a ruthenium ion, a rhodium ion, a palladium ion, a scandium ion, a gallium ion, an indium ion, and a radium ion. Among them, a calcium ion, a beryllium ion, a magnesium ion, a strontium ion, a barium ion, a zinc ion, an aluminum ion and the like are preferable, and a calcium ion, a magnesium ion, an aluminum ion, and the like are more preferable. The divalent or higher-valent metal cation may be used alone or in combination of two or more kinds.

The marine biodegradable polymer compound of the present invention may contain only one kind of each of the anionic polymer compound A and the anionic polymer compound B, may contain a plurality of different kinds of each of the anionic polymer compound A and the anionic polymer compound B, and may simultaneously contain another anion. Examples of the other anion include polyvalent anions, fatty acid anions, amino acid anions, amino acid derivative anions, and sulfonic acid anions.

Examples of the polyvalent anion include anions of 1,5-naphthalenedisulfonic acid, ethanedisulfonic acid, monoethyl phosphate and the like, malic acid, aspartic acid, glutamic acid, succinic acid, adipic acid, sebacic acid, terephthalic acid, isophthalic acid, and the like.

Examples of the fatty acid anion include anions of caproic acid, enanthic acid, caprylic acid, octylic acid, pelargonic acid, capric acid, undecylenic acid, lauric acid, myristic acid, pentadecylic acid, palmitic acid, palmitoleic acid, margaric acid, stearic acid, isostearic acid, oleic acid, vaccenic acid, ricinoleic acid, linoleic acid, linolenic acid, eleostearic acid, oxystearic acid, arachidic acid, mead acid, arachidonic acid, eicosapentaenoic acid, behenic acid, docosahexaenoic acid, lignoceric acid, nervonic acid, cerotic acid, montanoic acid, melissic acid, coconut oil fatty acid, and palm oil fatty acid.

Examples of the amino acid anion or amino acid derivative anion include anions of amino acids such as alanine, leucine, arginine, lysine, asparagine, methionine, aspartic acid, phenylalanine, cysteine, proline, glutamine, serine, glutamic acid, threonine, glycine, tryptophan, histidine, tyrosine, and isoleucine, and anions of amino acid derivatives having a hydrocarbon group, such as sarcosine derivatives (caproyl sarcosine, lauroyl sarcosine, myristoyl sarcosine, palmitoyl sarcosine, coconut oil fatty acid sarcosine, and the like), glutamic acid derivatives (caproyl glutamic acid, lauroyl glutamic acid, myristoyl glutamic acid, palmitoyl glutamic acid, stearoyl glutamic acid, coconut oil fatty acid acyl glutamic acid, cocoyl glutamic acid, acyl glutamic acid, dilauroyl glutamic acid, and the like), glycine derivatives (lauroyl glycine, myristoyl glycine, palmitoyl glycine, palmitoyl methylglycine, coconut oil fatty acid acylglycine, cocoyl glycine, and the like), alanine derivatives (lauryl methylalanine, myristoyl methylalanine, cocoyl alanine, coconut oil fatty acid methylalanine, and the like), lysine derivatives (lauroyl lysine, myristoyl lysine, palmitoyl lysine, stearoyl lysine, oleyl lysine, acylated lysine, and the like), aspartic acid derivatives (lauroyl aspartic acid, myristoyl aspartic acid, palmitoyl aspartic acid, stearoyl aspartic acid, and the like), taurine derivatives (lauroyl taurine, lauroyl methyl taurine, myristoyl taurine, myristoyl methyl taurine, palmitoyl taurine, palmitoyl methyl taurine, stearoyl taurine, stearoyl methyl taurine, and the like), and proline derivatives (lauroyl proline, myristoyl proline, palmitoyl proline, and the like).

Examples of the sulfonic acid anion include anions of alkyl sulfonic acid (lauryl sulfonic acid, myristyl sulfonic acid, cetyl sulfonic acid, stearyl sulfonic acid, oleyl sulfonic acid, and the like), dodecyl benzene sulfonic acid, dialkyl succinate sulfonic acid, monoalkyl succinate sulfonic acid, naphthalene sulfonic acid, olefin sulfonic acid, alkyl isethionic acid (lauroyl isethionic acid, myristoyl isethionic acid, palmitoyl isethionic acid, stearoyl isethionic acid, and the like), and dialkyl sulfosuccinic acid (dihexyl sulfosuccinic acid, dioctyl sulfosuccinic acid, didecyl sulfosuccinic acid, diisobutyl sulfosuccinic acid, and the like).

The metal ion equivalent of the marine biodegradable polymer compound (the content of divalent or higher-valent metal cations in the marine biodegradable polymer compound) is preferably 1 to 300 eq/$10^5$ g. In consideration of biodegradability in seawater and mechanical properties, the metal ion equivalent of the marine biodegradable polymer compound is more preferably 10 to 200 eq/$10^5$ g and still more preferably 20 to 100 eq/$10^5$ g. A metal ion equivalent within the above-mentioned range is preferable because satisfactory biodegradability is obtained, and mechanical properties are not impaired. The metal ion equivalent is a value measured by inductively coupled plasma mass spectrometry (ICP-MS).

The marine biodegradable polymer compound can be an amorphous or crystalline polymer compound depending on the blending ratio of the anionic polymer compound A and the anionic polymer compound B. The marine biodegradable polymer compound is solid at room temperature. Specifically, the lower limit of the softening point is preferably 0°C or higher, 40°C or higher, and 80°C or higher in this order, and the upper limit is preferably 250°C or lower, 200°C or lower, 180°C or lower, and 160°C or lower in this order. The marine biodegradable polymer compound preferably has a softening point within a range of 40 to 200°C, more preferably within a range of 60 to 180°C, and still more preferably within a range of 80 to 160°C.

As for the marine biodegradable polymer compound, the degree of biodegradability relative to cellulose is preferably 40% or more, more preferably 50% or more, still more preferably 60% or more, and most preferably 80% or more.

[Method for producing marine biodegradable polymer compound]

The marine biodegradable polymer compound can be produced by a method including a step of crosslinking the anionic polymer compound A and the anionic polymer compound B using a divalent or higher-valent metal salt (hereinafter, also referred to as a polyvalent metal salt).

Examples of the crosslinking treatment method include a method in which a powder, solution or dispersion liquid of a polyvalent metal salt is added dropwise to a solution or dispersion liquid containing the anionic polymer compound A and the anionic polymer compound B, and the anionic polymer compound A and the anionic polymer compound B are deposited or sedimented while a bonding treatment is performed, a method in which a powder, solution or dispersion liquid of a polyvalent metal salt is added dropwise to a melt of the anionic polymer compound A and the anionic polymer compound B, and a bonding treatment is performed, and a method in which a solution of dispersion liquid containing the anionic polymer compound A and the anionic polymer compound B is added to a powder of a polyvalent metal salt, or a solution or dispersion liquid in which a polyvalent metal salt is dissolved, and the anionic polymer compound A and the anionic polymer compound B are deposited or sedimented while a bonding treatment is performed. These methods may be carried out alone or in combination.

In a preferable example, first, a solution containing the anionic polymer compound A and the anionic polymer compound B dissolved in water, an organic solvent, or a mixed solvent thereof, or a melt containing the anionic polymer compound A and the anionic polymer compound B that are dissolved by heating is prepared. At this time, heating may be performed as necessary in order to improve the solubility or reduce the viscosity of the melt. Next, a solution containing a polyvalent metal salt is added to the obtained solution or melt and stirred. Alternatively, a solution or a melt containing the anionic polymer compound A and the anionic polymer compound B dissolved therein may be added to a solution containing a polyvalent metal salt and stirred.

Examples of the polyvalent metal salt include a calcium salt, a strontium salt, a magnesium salt, a barium salt, a radium salt, a lead salt, a zinc salt, a nickel salt, an iron salt, a copper salt, a cadmium salt, a cobalt salt, a manganese salt, an aluminum salt, a gallium salt, an indium salt, and a thallium salt. From the viewpoint that the metal of the polyvalent metal salt is contained in seawater, and of the environmental aspect, safety, and versatility, a calcium salt, a magnesium salt, and an aluminum salt are preferable, and in consideration of the environment in seawater, a calcium salt and a magnesium salt are more preferable. Specific examples of the polyvalent metal salt include calcium chloride, calcium sulfate, calcium carbonate, calcium hydroxide, calcium oxide, magnesium chloride, magnesium sulfate, magnesium carbonate, magnesium hydroxide, magnesium oxide, aluminum sulfate, sodium aluminum sulfate (sodium alum), and potassium aluminum sulfate (potassium alum). From the viewpoint of solubility in water, handleability, cost, and the like, calcium chloride, magnesium chloride, and aluminum sulfate are preferable.

The concentration of the polyvalent metal salt in the solution containing the polyvalent metal salt is preferably 1 to 40 wt%, and more preferably 10 to 30 wt%. The solvent of the solution is preferably water, a lower alcohol solvent such as methanol, ethanol, 1-propanol, or 2-propanol, an amphiphilic solvent such as acetone, acetonitrile, THF, DMF, DMSO, or NMP, or a mixed solvent thereof, but may be a mixed solvent with another organic solvent as long as the solvent can dissolve the salt so that the solution may have a desired concentration without dissolving the resin.

In addition, as long as the polyvalent metal salt has satisfactory reactivity and reacts even in a solid state, the polyvalent metal salt may be used in a powder form without a medium, or may be used in the form of a dispersion in a small amount of a medium.

For the purpose of controlling the particle size and the shape such as a spherical shape of the deposit or sediment, a surfactant or a polymer stabilizer may be dissolved in at least one of a solution containing the anionic polymer compounds A and B dissolved therein and a solution containing a polyvalent metal salt, during crosslinking.

The method for preparing a solution or dispersion liquid containing the anionic polymer compound A and the anionic polymer compound B is not limited, and examples thereof include a method of in which a monovalent salt of the anionic polymer compound A and a monovalent salt of the anionic polymer compound B are mixed with water or an organic solvent, and a method in which the acidic polymer compound A and the acidic polymer compound B in which a monovalent anionic group of the anionic polymer compound A and a monovalent anionic group of the anionic polymer compound B are bonded to a proton are mixed with water or an organic solvent, and a monovalent base is added thereto. These methods may be carried out alone or in combination. When the methods are carried out in combination, the order thereof is not particularly limited.

As the monovalent cation that constitutes the monovalent salt of the anionic polymer compound A and the anionic polymer compound B, a lithium ion, a sodium ion, a potassium ion, a rubidium ion, a cesium ion, a francium ion, an ammonium ion, a methylammonium ion, an ethylammonium ion, an anilinium ion, a pyridinium ion, a dimethylammonium ion, a diethylammonium ion, a trimethylammonium ion, a triethylammonium ion and the like are preferable. From the viewpoint of safety, environmental load, and operability, a sodium ion, a potassium ion, and an ammonium ion are more preferable, and a sodium ion and a potassium ion are still more preferable.

Examples of the monovalent base include lithium hydroxide, sodium hydroxide, potassium hydroxide, lithium carbonate, sodium carbonate, potassium carbonate, lithium hydrogen carbonate, sodium hydrogen carbonate, potassium hydrogen carbonate, trisodium phosphate, tripotassium phosphate, lithium methoxide, sodium methoxide, potassium methoxide, lithium tert-butoxide, sodium tert-butoxide, potassium tert-butoxide, ammonia, methylamine, ethylamine, TEA, and DBU. Preferable are lithium hydroxide, sodium hydroxide, potassium hydroxide, lithium carbonate, sodium carbonate, potassium carbonate, lithium hydrogen carbonate, sodium hydrogen carbonate, or potassium hydrogen carbonate. In consideration of safety and environmental load, sodium hydroxide, potassium hydroxide, sodium carbonate, potassium carbonate, sodium hydrogen carbonate, and potassium hydrogen carbonate are particularly preferable.

By adding a base containing a divalent or higher-valent metal to water or an organic solvent containing the acidic polymer compound A and the acidic polymer compound B, a marine biodegradable polymer compound can be formed in a chain reaction following the formation of the anionic polymer compound A and the anionic polymer compound B.

Examples of the base containing a divalent or higher-valent metal include magnesium hydride, strontium hydride, calcium hydride, barium hydride, magnesium methoxide, calcium methoxide, strontium methoxide, barium methoxide, magnesium hydroxide, calcium hydroxide, strontium hydroxide, barium hydroxide, magnesium oxide, strontium oxide, calcium oxide, barium oxide, magnesium carbonate, strontium carbonate, calcium carbonate, barium carbonate, magnesium hydrogen carbonate, strontium hydrogen carbonate, calcium hydrogen carbonate, and barium hydrogen carbonate. From the viewpoint of solubility in water, reactivity, cost, and the like, calcium hydride, calcium methoxide, calcium hydroxide, and barium hydroxide are preferable, and calcium hydroxide is more preferable.

In a preferable example, a solution containing an acidic polymer compound A and an acidic polymer compound B dissolved in water, an organic solvent, or a mixed solvent thereof, or a melt containing the acidic polymer compound A and the acidic polymer compound B that are dissolved by heating is prepared. At this time, heating may be performed as necessary in order to improve the solubility or reduce the viscosity of the melt. Next, a solution of a base containing a divalent or higher-valent metal is added to the obtained solution or melt and stirred. Alternatively, a solution or a melt containing the acidic polymer compound A and the acidic polymer compound B dissolved therein may be added to a solution of a base containing a divalent or higher-valent metal and stirred.

Examples of the base containing a divalent or higher-valent metal include magnesium hydride, strontium hydride, calcium hydride, barium hydride, magnesium methoxide, calcium methoxide, strontium methoxide, barium methoxide, magnesium hydroxide, calcium hydroxide, strontium hydroxide, barium hydroxide, magnesium oxide, strontium oxide, calcium oxide, barium oxide, magnesium carbonate, strontium carbonate, calcium carbonate, barium carbonate, magnesium hydrogen carbonate, strontium hydrogen carbonate, calcium hydrogen carbonate, and barium hydrogen carbonate. From the viewpoint of solubility in water, reactivity, cost, and the like, calcium hydride, calcium methoxide, calcium hydroxide, and barium hydroxide are preferable, and calcium hydroxide is more preferable.

The anionic polymer compound A and the anionic polymer compound B are not necessarily crosslinked at the same time. In an example, a marine biodegradable polymer compound can also be obtained by crosslinking a part of one anionic polymer compound, then adding the other anionic polymer compound, and further performing a crosslinking treatment.

By performing the crosslinking treatment on the anionic polymer compound A and the anionic polymer compound B, the anionic polymer compound A and the anionic polymer compound B can be bonded via a metal cation, and the target marine biodegradable polymer compound that has gradually become insoluble is deposited, sedimented or obtained as a bulk. The treatment time is preferably 0.5 to 24 hours, and preferably 1 to 12 hours.

Heating may be performed when the target marine biodegradable polymer compound is deposited or sedimented. The heating may be performed at the time of mixing a solution containing the anionic polymer compound A and the anionic polymer compound B dissolved therein or a melt of the anionic polymer compound A and the anionic polymer compound B with a solution containing a polyvalent metal salt, at the time of stirring after mixing, or at both of the times. Alternatively, the heating may be performed at the time of mixing a solution containing the acidic polymer compound A and the acidic polymer compound B dissolved therein or a melt of the acidic polymer compound A and the acidic polymer compound B with a solution containing a base containing a divalent or higher-valent metal, at the time of stirring after mixing, or at both of the times. The heating temperature is preferably 5 to 200°C, more preferably 10 to 150°C, and still more preferably 20 to 100°C.

After the treatment, the particles are washed and dried as necessary, whereby the marine biodegradable polymer compound can be obtained. The washing can be performed by an ordinary method, and examples of the method include a method of removing the solvent after the bonding treatment, adding water thereto, and centrifuging the resulting mixture. The drying can be performed by an ordinary method. For example, the drying can be performed by a method such as spray drying, vacuum drying, or freeze drying. Incidentally, the obtained marine biodegradable polymer compound may be subjected to a surface treatment or a pulverization treatment to adjust the particle size by a known facility as necessary.

The marine biodegradable polymer compound may be a compound in which at least one of monovalent anionic groups which are not involved in bonding between the anionic polymer compounds, which are not bonded to each other via a divalent metal cation, is capped with a capping segment group.

Depending on the capping segment group selected, in a single material and a composite material (marine biodegradable resin composition) containing the present material, a plurality of effects can be exerted: adjustment of the melting temperature and melt viscosity, adjustment of the crystallinity, adjustment of adhesion of microorganisms and biodegradability, adjustment of physical properties such as the tensile strength, flexural strength, and elasticity of the resin, improvement of compatibility with the resin, adjustment of hydrophobicity, adjustment of water repellency, adjustment of adhesive properties, and adjustment of plasticity, and improvement can be achieved in terms of both the biodegradability and physical properties of the marine biodegradable resin composition. Since an organic anion serving as the capping segment is desired to have a structure having biodegradability in the ocean, it is desirable to select a capping segment group having a molecular weight of 5,000 or less and having marine biodegradability. For example, when emphasis is placed on the biodegradation rate in the ocean and the maintenance of average physical properties, the molecular weight of the capping segment group is preferably 2,500 or less, and more preferably 1,000 or less.

Specifically, the capping segment group preferably has a hydrocarbon group having 3 or more carbon atoms, more preferably has a hydrocarbon group having 6 or more carbon atoms, still more preferably has a hydrocarbon group having 10 or more carbon atoms, and most preferably has a hydrocarbon group having 12 or more carbon atoms. The upper limit of the number of carbon atoms in the hydrocarbon group is not particularly limited, but the number of carbon atoms is preferably 30 or less, more preferably 25 or less, and still more preferably 20 or less.

The capping segment group is preferably an organic anion selected from a carboxylic acid anion having a hydrocarbon group having 3 or more carbon atoms, a sulfonic acid anion having a hydrocarbon group having 3 or more carbon atoms, a sulfate ester anion having a hydrocarbon group having 3 or more carbon atoms, and a phosphate ester anion having a hydrocarbon group having 3 or more carbon atoms. Among them, a monovalent organic anion derived from a carboxylic acid having a hydrocarbon group having 3 or more carbon atoms is preferable, and a monovalent organic anion derived from a fatty acid having a hydrocarbon group having 3 or more carbon atoms or an amino acid derivative having a hydrocarbon group having 3 or more carbon atoms is more preferable.

The end-capping can be performed using at least one end-capping agent selected from a carboxylic acid having a hydrocarbon group having 3 or more carbon atoms, a salt of the carboxylic acid, a sulfonic acid having a hydrocarbon group having 3 or more carbon atoms, a salt of the sulfonic acid, a sulfuric acid ester having a hydrocarbon group having 3 or more carbon atoms, a salt of the sulfuric acid ester, a phosphoric acid ester having a hydrocarbon group having 3 or more carbon atoms, and a salt of the phosphoric acid ester. The end-capping can be performed by adding the end-capping agent to a solution containing the polymer compound A or B, and then performing a bonding treatment using a polyvalent metal ion.

The end-capping agent is preferably an acid compound or a salt compound described in paragraphs [0029] to [0044] of JP-A 2021-191810.

[Marine biodegradable resin composition]

The marine biodegradable resin composition of the present invention contains the marine biodegradable polymer compound.

The marine biodegradable polymer compound may be used as a main raw material, or may be used as an additive in combination with a different resin. The different resin is not particularly limited, but is preferably a biodegradable resin. When used in combination with the different resin, the marine biodegradable polymer compound as an additive functions as a marine biodegradation promoter. At this time, the composite of the marine biodegradation promoter and the resin serves as a resin composition whose biodegradation in the ocean is promoted. In addition, for the purpose of adjusting the physical properties and handleability of the resin composition, as the different resin, a plurality of kinds of resins can be used in combination.

Examples of the different resin include polyethylene, polyester, polypropylene, polyethylene terephthalate, polystyrene, polyurethane, an epoxy resin, a chlorinated polyethylene resin, a chlorinated polypropylene resin, a modified nylon resin, a phenol resin, a silicone resin, polyvinyl acetate, an ethylene-vinyl acetate copolymer, polyvinyl chloride, polyvinylidene chloride, a styrene-maleic acid resin, a styrene-butadiene resin, a butadiene resin, an acrylonitrile-butadiene resin, a poly(meth)acrylonitrile resin, a (meth)acrylamide resin, bio-PET, bio-polyamide, bio-polycarbonate, bio-polyurethane, polyvinyl alcohol, polybutylene adipate/terephthalate, polyethylene terephthalate succinate, bio-polybutylene succinate, a polylactic acid blend, a starch blend polyester resin, polybutylene terephthalate succinate, polylactic acid, and polyhydroxyalkanoic acid. In particular, a resin having high biodegradability is preferable in consideration of reduction of environmental load and an effect of promoting marine biodegradability.

Examples of the biodegradable resin include resins derived from petroleum as a raw material, such as polycaprolactone, poly(caprolactone/butylene succinate), polybutylene succinate (PBS), poly(butylene succinate/adipate) (PBSA), poly(butylene adipate/terephthalate) (PBAT), poly(butylene succinate/carbonate), a polyethylene terephthalate copolymer, poly(ethylene terephthalate/succinate), poly(tetramethylene adipate/terephthalate), polyethylene succinate, polyvinyl alcohol, polyglycolic acid, a glycolic acid/caprolactone copolymer, and a glycolic acid/trimethylene carbonate copolymer; resins partially derived from biomass as a raw material, such as a (polylactic acid/polybutylene succinate-based) block copolymer, a (polylactic acid/polycaprolactone) copolymer, a (polylactic acid/polyether) copolymer, polylactic acid blend PBAT, a lactic acid/glycolic acid copolymer, bio-polybutylene succinate, poly(butylene succinate/adipate), a starch blend polyester resin, and poly(butylene terephthalate succinate); resins 100% derived from biomass as a raw material, such as polyhydroxyalkanoic acids including polyhydroxybutyric acid, polyhydroxyvaleric acid, polyhydroxycaprylic acid, poly(hydroxybutyrate/hydroxyhexanoate) (PHBH), poly(3-hydroxybutyrate/4-hydroxybutyrate) (P3HB4HB), and poly(hydroxybutyrate/hydroxyvalerate) (PHBV), and polylactic acid (PLA); and resins derived from natural polymers, such as cellulose, cellulose acetate, a cellulose ester resin, starch, esterified starch, and chitosan. These may be used alone or in admixture of two or more thereof.

Among them, it is preferable to combine a biodegradable resin selected from resins having biodegradability in soil or compost but having poor biodegradability in the ocean, for example, polycaprolactone, PBS, PBSA, PBAT, poly(tetramethylene adipate/terephthalate), poly(butylene succinate/carbonate), polyhydroxyalkanoic acids such as PHBH and PHBV, PLA, and resins derived from natural polymers, such as cellulose, starch, and chitosan, with the marine biodegradable polymer compound. As the biodegradable resin, PBSA, PBS, PBAT, PLA, and resins derived from starch are particularly preferable.

In addition, in consideration of reduction of environmental load, 20% or more of the raw material of the resin to be combined is preferably derived from biomass, 50% or more of the raw material of the resin is preferably derived from biomass, and the raw material of the resin is most preferably 100% derived from biomass.

The marine biodegradable resin composition of the present invention may contain a solvent. The solvent may either dissolve the resin serving as a matrix while leaving the marine biodegradable polymer compound undissolved as particles, or may dissolve both the resin and the marine biodegradable polymer compound. Appropriate adjustment of the solvent makes it possible to use the marine biodegradable resin composition as a molded body having a film shape formed by casting or the like, a paint, an ink, a surface treatment agent, and the like. Preferable examples of the solvent include water, formic acid, hexane, heptane, acetonitrile, N-methylpyrrolidone, dimethylformamide, dimethylacetamide, dimethylsulfoxide, dimethylsulfone, acetone, methyl ethyl ketone, diethyl ketone, acetophenone, dimethyl ether, dipropyl ether, tetrahydrofuran, chloroform, methylene chloride (dichloromethane), trichloroethylene, ethylene dichloride, tetrachloroethane, chlorobenzene, methanol, ethanol, n-propanol, isopropanol, butanol, pentanol, hexafluoroisopropanol, methyl glycol, methyl triglycol, hexyl glycol, phenyl glycol, ethylene glycol, propylene glycol, phenol, cresol, polyethylene glycol, benzene, toluene, and xylene. These may be used singly or as a mixture of two or more types thereof.

When a solvent is used, the total concentration of the resin and the marine biodegradable polymer compound in the resin composition is preferably 0.5 to 90 wt%, more preferably 1 to 80 wt%, still more preferably 5 to 60 wt%, and most preferably 10 to 50 wt%. In addition, the ratio of the marine biodegradable polymer compound to the resin is preferably 99 : 1 to 10 : 90, more preferably 97 : 3 to 40 : 60, still more preferably 95 : 5 to 50 : 50, and most preferably 90 : 10 to 60 : 40 in weight ratio.

The lower limit of the softening point of the resin composition is preferably 60°C or higher, 70°C or higher, and 80°C or higher in this order, and the upper limit of the softening point of the resin composition is preferably 300°C or lower, 250°C or lower, 200°C or lower, and 180°C or lower in this order. The resin composition preferably has a softening point within a range of 60 to 250°C, more preferably within a range of 70 to 200°C, and still more preferably within a range of 80 to 180°C.

In addition, the marine biodegradable resin composition of the present invention does not have to contain a solvent. In this case, the resin may be thermally melted, and an unmelted marine biodegradable polymer compound may be added thereto and mixed, or the resin and the marine biodegradable polymer compound may be melted together and mixed.

The content of the marine biodegradable polymer compound in the marine biodegradable resin composition of the present invention is preferably 1 to 60 wt%, more preferably 3 to 50 wt%, still more preferably 5 to 45 wt%, even more preferably 7 to 40 wt%, and most preferably 10 to 35 wt%. Meanwhile, the content of the resin is preferably 40 to 99 wt%, more preferably 50 to 97 wt%, still more preferably 55 to 95 wt%, even more preferably 60 to 93 wt%, and most preferably 65 to 90 wt%. When the marine biodegradable resin composition contains the marine biodegradable polymer compound within the above-mentioned range, it is possible to utilize the marine biodegradable polymer compound as a marine biodegradation promoter that promotes biodegradability in seawater while maintaining the physical properties of the biodegradable resin. The marine biodegradable polymer compound may be used singly or in combination of two or more types thereof.

When the content of the marine biodegradable polymer compound in the resin composition is 10 wt%, the tensile strength of a test piece obtained from the resin composition is preferably 80% or more, more preferably 85% or more, and still more preferably 90% or more as compared to a blank resin test piece that does not contain the marine biodegradable polymer compound of the present invention. When the content of the marine biodegradable polymer compound in the resin composition is 30 wt%, the tensile strength of the test piece obtained from the resin composition is preferably 65% or more, more preferably 70% or more, and still more preferably 80% or more.

The marine biodegradable resin composition of the present invention may contain additives such as an antioxidant, a release agent, a peeling agent, a surface modifier, a hydrophobizing agent, a water repellent agent, a hydrophilizing agent, a dye and a pigment, a colorant, a heat stabilizer, a light stabilizer, a weather resistance improver, an antistatic agent, an antifogging agent, a lubricant, an anti-blocking agent, a hardening agent, a softening agent, a compatibilizer, a flame retardant, a flowability improver, a plasticizer, a dispersant, an antibacterial agent, a filler, and a metal deactivator as necessary. The content of these additives is not particularly limited as long as the effects of the present invention are not impaired, but is preferably about 0.1 to 50 parts by weight per 100 parts by weight of the resin.

When the marine biodegradable resin composition contains a solvent, the marine biodegradable resin composition can be prepared, for example, by adding a resin, the marine biodegradable polymer compound, and if necessary, the additive to a solvent simultaneously or in an arbitrary order, and mixing them. Alternatively, when the marine biodegradable resin composition does not contain a solvent, for example, the resin may be melted, and the marine biodegradable polymer compound, and if necessary, the additive may be added thereto simultaneously or in an arbitrary order and mixed, or the resin and the marine biodegradable polymer compound may be heated, melted together, and mixed, and if necessary, the additive may be added and mixed.

[Molded body]

The resin composition can be molded to provide a molded body containing the resin and the marine biodegradable polymer compound dispersed or dissolved in the resin. When the resin composition contains a solvent, the resin composition may be molded as it is, and when the resin composition does not contain a solvent, the resin composition may be molded after the resin or the resin and the marine biodegradable polymer compound in the resin composition are thermally melted.

Examples of the shape of the molded body include a film shape, a fiber shape, a plate shape, a foam molded body shape, and other shapes according to use. The molding method is not particularly limited, and various conventionally known molding methods can be used. Specific examples thereof include blow molding, injection molding, extrusion molding, compression molding, melt extrusion molding, solution casting molding, and calender molding.

[Uses]

The marine biodegradable polymer compound and the marine biodegradable resin composition of the present invention can be used as a raw material of plastic molded articles and as various additives for molded articles, such as a liquid, a coating film, a film, a board, and paper. When the marine biodegradable polymer compound and the marine biodegradable resin composition are used as a raw material of a plastic molded article, they can be used as a raw material of general purpose and marine use materials, such as a film, a packaging, a container, a tray, a laminating material, an adhesive agent, a covering material, a fiber for medical care, clothing, or the like, shoes, a belt, a tire, a tube, an impact absorbing material, a fishing line, and a fishing net, and can be particularly suitably used as a raw material of marine use materials and the like. Further, when the marine biodegradable polymer compound and the marine biodegradable resin composition are used as an additive, they can be widely used as an additive for, for example, a light scattering agent, an optical filter material, a colorant, a cosmetic, an absorbent, an adsorbent, an ink, an adhesive agent, an electromagnetic wave shielding material, a fluorescent sensor, a biomarker, a recording material, a recording element, a polarizing material, a drug retainer for a drug delivery system (DDS), a biosensor, a DNA chip, an inspection agent, a baked porous molded product, an anti-blocking agent, an additive for a printing ink used for screen printing, offset printing, process printing, gravure printing, tampography, a coater, or inkjet printing, an ink additive for a writing instrument such as a marking pen, a ballpoint pen, a fountain pen, a brush pen, or a felt-tipped pen, an additive for stationery such as a crayon, an artists' paint, and an eraser, and an additive for a paint used for brush coating, spray coating, electrostatic coating, electrodeposition coating, flow coating, roller coating, or dip coating. In particular, the marine biodegradable resin composition can be widely used as an additive for a paint and the like used for marine use, such as a ship paint.

EXAMPLES

Examples and Comparative Examples are given below to more concretely illustrate the invention, although the invention is not limited by these Examples. In the following Examples and Comparative Examples, the metal ion equivalent was measured by an emission spectrometry using ICP-MS (ICPE-9820 manufactured by Shimadzu Corporation) after a target substance was heated and decomposed with nitric acid or aqua regia. In addition, the number average molecular weight and the number of anionic groups were measured using a nuclear magnetic resonance apparatus (JNM-ECZ400S manufactured by JEOL Ltd.), and calculated from integrated values of peaks in $^1$H-NMR.

[1] Synthesis of anionic polymer compound A

[Synthesis Example 1-1] Synthesis of anionic polymer compound A-1

A 1000 mL reaction vessel was charged with 400 g of polyester diol (Kuraray Polyol P-1010 manufactured by Kuraray Co., Ltd.), 84 g of succinic anhydride, and 40 g of acetonitrile, and the resulting mixture was stirred under a nitrogen atmosphere at 130°C for 2 hours to yield an acidic polymer compound A-1. To a 3000 mL recovery flask, 500 g of the acidic polymer compound A-1, 412 g of water, and 88 g of potassium hydrogen carbonate were added, and the resulting mixture was stirred at room temperature to yield an anionic polymer compound A-1.
The aniline polymer compound A-1 was linear and had a monovalent anionic group at both terminals thereof, and it was confirmed by $^1$H-NMR measurement that the anionic polymer compound A-1 had a number average molecular weight of 1300.

[Synthesis Example 1-2] Synthesis of anionic polymer compound A-2

A 1000 mL reaction vessel was charged with 400 g of polyester triol (Kuraray Polyol F-1010 manufactured by Kuraray Co., Ltd.), 126 g of succinic anhydride, and 60 g of acetonitrile, and the resulting mixture was stirred under a nitrogen atmosphere at 130°C for 2 hours to yield an acidic polymer compound A-2. To a 3000 mL recovery flask, 500 g of the acidic polymer compound A-2, 368 g of water, and 132 g of potassium hydrogen carbonate were added, and the resulting mixture was stirred at room temperature to yield an anionic polymer compound A-2.
The aniline polymer compound A-2 was a three-forked branched polymer, and had a monovalent anionic group at all terminals thereof, and it was confirmed by $^1$H-NMR measurement that the anionic polymer compound A-2 had a number average molecular weight of 1400.

[Synthesis Example 1-3] Synthesis of anionic polymer compound A-3

To a 1000 mL recovery flask, 130 g of 1,4-butanediol, 71 g of dimethyl terephthalate, 150 g of dimethyl adipate, and 2.4 g of titanium tetraisopropoxide were added, and the resulting mixture was stirred under a nitrogen atmosphere at 160°C for 6 hours. Then, 32 g of succinic anhydride and 40 g of acetonitrile were added thereto, and the resulting mixture was stirred at 130°C for 2 hours to yield an acidic polymer compound A-3. To a 3000 mL recovery flask, 350 g of the acidic polymer compound A-3, 316 g of water, and 34 g of potassium hydrogen carbonate were added, and the resulting mixture was stirred at 80°C to yield an anionic polymer compound A-3.
The aniline polymer compound A-3 was linear and had a monovalent anionic group at both terminals thereof, and it was confirmed by $^1$H-NMR measurement that the anionic polymer compound A-3 had a number average molecular weight of 2300.

[Synthesis Example 1-4] Synthesis of anionic polymer compound A-4

To a 1000 mL recovery flask, 280 g of hexamethylenediamine, 340 g of sebacic acid, and 80 g of water were added. The recovery flask was placed in an autoclave, and thoroughly purged with nitrogen. Then, the resulting mixture was heated to 230°C with stirring. Further, the mixture was stirred at 230°C for 1 hour while the closed state was maintained. Then, the pressure was released to ordinary pressure, and the solid content was washed with ethanol and dried. 400 g of the dried resin was pulverized, 82 g of succinic anhydride, 100 g of potassium carbonate and 400 g of acetonitrile were added thereto, and the resulting mixture was stirred at 70°C for 4 hours. Then, the reaction solution was cooled to room temperature, and a sediment was deposited. The sediment was removed by filtration, and the resulting filtrate was concentrated under reduced pressure to yield an acidic polymer compound A-4. Finally, to a 3000 mL recovery flask, 300 g of the acidic polymer compound A-4, 263 g of water, and 37 g of potassium hydrogen carbonate were added, and the resulting mixture was stirred at 80°C to yield an anionic polymer compound A-4.
The aniline polymer compound A-4 was linear and had a monovalent anionic group at both terminals thereof, and it was confirmed by $^1$H-NMR measurement that the anionic polymer compound A-4 had a number average molecular weight of 1800.

[Synthesis Example 1-5] Synthesis of anionic polymer compound A-5

A 1000 mL reaction vessel was charged with 300 g of polyether diol (Polytetramethylene Ether Glycol manufactured by Mitsubishi Chemical Corporation), 94 g of succinic anhydride, and 30 g of acetonitrile, and the resulting mixture was stirred under a nitrogen atmosphere at 130°C for 2 hours to yield an acidic polymer compound A-5. To a 3000 mL recovery flask, 400 g of the acidic polymer compound A-5, 1,100 g of water, and 100 g of potassium hydrogen carbonate were added, and the resulting mixture was stirred at room temperature to yield an anionic polymer compound A-5.

The aniline polymer compound A-5 was linear and had a monovalent anionic group at both terminals thereof, and it was confirmed by $^1$H-NMR measurement that the anionic polymer compound A-5 had a number average molecular weight of 900.

The following Table 1 collectively shows the anionic polymer compounds A-1 to A-5.

[Table 1]

|  | Anionic polymer compound | Molecular weight | Number of anionic groups per molecule |
|---|---|---|---|
| Synthesis Example 1-1 | A-1 | 1300 | 2 |
| Synthesis Example 1-1 | A-2 | 1400 | 3 |
| Synthesis Example 1-3 | A-3 | 2300 | 2 |
| Synthesis Example 1-4 | A-4 | 1800 | 2 |
| Synthesis Example 1-5 | A-5 | 900 | 2 |

[2] Synthesis of anionic polymer compound B

[Synthesis Example 2-1] Synthesis of anionic polymer compound B-1

To a 1000 mL recovery flask, 204 g of ethylene glycol, 80 g of dimethyl terephthalate, 122 g of sodium dimethyl 5-sulfoisophthalate, and 1.0 g of titanium tetraisopropoxide were added, and the resulting mixture was stirred under a nitrogen atmosphere at 200°C for 3 hours. Then, the liquid was removed by evaporation under reduced pressure to yield an anionic polymer compound B-1.

It was confirmed by $^1$H-NMR measurement that the anionic polymer compound B-1 had a number average molecular weight of 3,000 and had six monovalent anionic groups on average in the side chain.

[Synthesis Example 2-2] Synthesis of anionic polymer compound B-2

To a 1000 mL recovery flask, 142 g of ethylene glycol, 110 g of dimethyl sebacate, 142 g of sodium dimethyl 5-sulfoisophthalate, and 0.7 g of titanium tetraisopropoxide were added, and the resulting mixture was stirred under a nitrogen atmosphere at 200°C for 3 hours to yield an anionic polymer compound B-2.

It was confirmed by $^1$H-NMR measurement that the anionic polymer compound B-2 had a number average molecular weight of 1,500 and had three monovalent anionic groups on average in the side chain.

[Synthesis Example 2-3] Synthesis of anionic polymer compound B-3

To a 1000 mL recovery flask, 195 g of 1,4-butanediol, 110 g of dimethyl adipate, 80 g of sodium dimethyl 5-sulfoisophthalate, and 0.9 g of titanium tetraisopropoxide were added, and the resulting mixture was stirred under a nitrogen atmosphere at 200°C for 3 hours to yield an anionic polymer compound B-3.

It was confirmed by $^1$H-NMR measurement that the anionic polymer compound B-3 had a number average molecular weight of 1,900 and had three monovalent anionic groups on average in the side chain.

[Synthesis Example 2-4] Synthesis of anionic polymer compound B-4

To a 1000 mL recovery flask, 11 g of hexamethylenediamine and 160 g of tetrahydrofuran were added. Then, a solution obtained by mixing 25 g of pyromellitic anhydride and 200 g of tetrahydrofuran was gradually added thereto, and the resulting mixture was stirred under a nitrogen atmosphere at 50°C for 2 hours. The solvent was removed by evaporation, 22 g of potassium hydrogen carbonate and 200 g of water were added, and the resulting mixture was stirred at room temperature to yield an anionic polymer compound B-4.

It was confirmed by $^1$H-NMR measurement that the anionic polymer compound B-4 had a number average molecular weight of 2,000 and had 13 monovalent anionic groups on average in the side chain.

[Synthesis Example 2-5] Synthesis of anionic polymer compound B-5

To a 1000 mL recovery flask, 119.1 g of 1,4-butanediol, 75.6 g of succinic acid, and 25.0 g of maleic acid were added, and the resulting mixture was stirred under a nitrogen atmosphere at 160°C for 6 hours. Then, 90.1 g of 3-mercaptopropionic acid and 34.4 g of acetonitrile were added thereto, and the resulting mixture was stirred at 130°C for 4 hours to yield an anionic polymer compound B-5.

It was confirmed by $^1$H-NMR measurement that the anionic polymer compound B-5 had a number average molecular weight of 1,800 and had three monovalent anionic groups on average.

The following Table 2 collectively shows the anionic polymer compounds B-1 to B-5.

[Table 2]

|  | Anionic polymer compound | Molecular weight | Number of anionic groups per molecule |
|---|---|---|---|
| Synthesis Example 2-1 | B-1 | 3000 | 6 |
| Synthesis Example 2-2 | B-2 | 1500 | 3 |
| Synthesis Example 2-3 | B-3 | 1900 | 3 |
| Synthesis Example 2-4 | B-4 | 2000 | 13 |
| Synthesis Example 2-5 | B-5 | 1800 | 3 |

[3] Biodegradable test of anionic polymer compounds

[Reference Examples 1 to 10]

The anionic polymer compounds A-1 to A-5 and the anionic polymer compounds B-1 to B-5 were subjected to a seawater biodegradation test by the following method. Microcrystalline cellulose (Avicel PH-101 manufactured by Sigma-Aldrich Co. LLC.) was used as a control material, and the biodegradability was evaluated in terms of degree of biodegradation relative to cellulose. The results are shown in Table 4.

<Test method and conditions>

Method for measuring degree of biodegradation: measurement of oxygen consumption by a closed respirometer (see ASTM D6691)

| Test apparatus: | OxiTop IDS (manufactured by WTW) |
|---|---|
| Culture temperature: | 30 ± 1°C, dark place |

$$\text{Degree of biodegradation (\%)} = (BOD_O - BOD_B)/\text{ThOD} \times 100$$

$BOD_O$:   biochemical oxygen demand in test or inoculum activity verification (measured value: mg)

$BOD_B$:   average biochemical oxygen demand in blank test (measured value: mg)

ThOD:   theoretical oxygen demand required when test material or control material has been completely oxidized (calculated value: mg)
          Theoretical oxygen demand (calculated value: mg)

Degree of biodegradation relative to cellulose (%) = (maximum degree of biodegradation of test particles/maximum degree of biodegradation of cellulose) × 100 Seawater (collected from Tokyo Bay [Port of Chiba in Chiba Prefecture])

Foreign matters were removed from the collected seawater with a 10 $\mu$m filter, and then the seawater was aerated at room temperature of 25°C. In addition, 0.05 g/L of ammonium chloride and 0.1 g/L of potassium dihydrogen phosphate were added as inorganic nutrients.

[Table 3]

| | Polymer compound | Degree of biodegradation (%) | | | | Degree of biodegradation (maximum value) | Degree of degradation relative to cellulose |
|---|---|---|---|---|---|---|---|
| | | 15 days | 30 days | 45 days | 60 days | | |
| Reference Example 1 | A-1 | 33 | 52 | 68 | 70 | 70 | 113 |
| Reference Example 2 | A-2 | 36 | 50 | 60 | 66 | 66 | 106 |
| Reference Example 3 | A-3 | 21 | 29 | 37 | 45 | 45 | 73 |
| Reference Example 4 | A-4 | 26 | 42 | 51 | 55 | 55 | 89 |
| Reference Example 5 | A-5 | 38 | 49 | 60 | 60 | 60 | 97 |
| Reference Example 6 | B-1 | 15 | 23 | 28 | 32 | 32 | 52 |
| Reference Example 7 | B-2 | 22 | 33 | 45 | 48 | 48 | 77 |
| Reference Example 8 | B-3 | 21 | 30 | 41 | 46 | 46 | 74 |
| Reference Example 9 | B-4 | 30 | 48 | 54 | 54 | 54 | 87 |
| Reference Example 10 | B-5 | 32 | 41 | 55 | 58 | 58 | 94 |
| Control material | Cellulose | 34 | 49 | 62 | 61 | 62 | 100 |

From the results shown in Table 3, the anionic polymer compound A and the anionic polymer compound B had a biodegradability of 40% or more in terms of the degree of degradation relative to cellulose until the culture period of 60 days.

[4] Synthesis of marine biodegradable polymer compounds

[Example 1-1] Synthesis of marine biodegradable polymer compound C-1

To a 1000 mL recovery flask, 400 g of a 25 wt% aqueous anionic polymer compound A-1 and 100 g of a 25 wt% aqueous anionic polymer compound B-1 were added, and the resulting mixture was thoroughly stirred to homogeneity. Then, 140 g of a 30 wt% aqueous calcium chloride was added thereto, and the resulting mixture was stirred to form a sediment. The sediment was washed with water, and then dried under reduced pressure to yield a marine biodegradable polymer compound C-1.

[Example 1-2] Synthesis of marine biodegradable polymer compound C-2

To a 1000 mL recovery flask, 200 g of a 50 wt% aqueous anionic polymer compound A-2 and 400 g of a 25 wt% aqueous anionic polymer compound B-2 were added, and the resulting mixture was thoroughly stirred to homogeneity. Then, 175 g of a 30 wt% aqueous calcium chloride was added thereto, and the resulting mixture was stirred to form a sediment. The sediment was washed with water, and then dried under reduced pressure to yield a marine biodegradable polymer compound C-2.

[Example 1-3] Synthesis of marine biodegradable polymer compound C-3

To a 1000 mL recovery flask, 160 g of a 50 wt% aqueous anionic polymer compound A-3 and 480 g of a 25 wt% aqueous anionic polymer compound B-3 were added, and the resulting mixture was thoroughly stirred to homogeneity. Then, 120 g of a 30 wt% aqueous magnesium chloride was added thereto, and the resulting mixture was stirred to form a sediment. The sediment was washed with water, and then dried under reduced pressure to yield a marine biodegradable polymer compound C-3.

[Example 1-4] Synthesis of marine biodegradable polymer compound C-4

To a 1000 mL recovery flask, 320 g of a 50 wt% aqueous anionic polymer compound A-4 and 160 g of a 25 wt% aqueous anionic polymer compound B-1 were added, and the resulting mixture was thoroughly stirred to homogeneity. Then, 110 g of a 30 wt% aqueous calcium chloride was added thereto, and the resulting mixture was stirred to form a sediment. The sediment was washed with water, and then dried under reduced pressure to yield a marine biodegradable polymer compound C-4.

[Example 1-5] Synthesis of marine biodegradable polymer compound C-5

To a 2000 mL recovery flask, 640 g of a 50 wt% aqueous anionic polymer compound A-5 and 160 g of a 25 wt% aqueous anionic polymer compound B-1 were added, and the resulting mixture was thoroughly stirred to homogeneity. Then, 320 g of a 40 wt% aqueous aluminum sulfate was added thereto, and the resulting mixture was stirred to form a sediment. The sediment was washed with water, and then dried under reduced pressure to yield a marine biodegradable polymer compound C-5.

[Example 1-6] Synthesis of marine biodegradable polymer compound C-6

To a 1000 mL recovery flask, 160 g of a 50 wt% aqueous anionic polymer compound A-1 and 480 g of a 25 wt% aqueous anionic polymer compound B-4 were added, and the resulting mixture was thoroughly stirred to homogeneity. Then, 360 g of a 30 wt% aqueous calcium chloride was added thereto, and the resulting mixture was stirred to form a sediment. The sediment was washed with water, and then dried under reduced pressure to yield a marine biodegradable polymer compound C-6.

[Example 1-7] Synthesis of marine biodegradable polymer compound C-7

To a 1000 mL recovery flask, 120 g of a 50 wt% aqueous anionic polymer compound A-3 and 560 g of a 25 wt% aqueous anionic polymer compound B-5 were added, and the resulting mixture was thoroughly stirred to homogeneity. Then, 130 g of a 30 wt% aqueous calcium chloride was added thereto, and the resulting mixture was stirred to form a sediment. The sediment was washed with water, and then dried under reduced pressure to yield a marine biodegradable polymer compound C-7.

[Example 1-8] Synthesis of marine biodegradable polymer compound C-8

To a 1000 mL recovery flask, 240 g of a 50 wt% aqueous anionic polymer compound A-1, 80 g of a 50 wt% aqueous anionic polymer compound A-2 and 160 g of a 25 wt% aqueous anionic polymer compound B-1 were added, and the resulting mixture was thoroughly stirred to homogeneity. Then, 160 g of a 30 wt% aqueous calcium chloride was added thereto, and the resulting mixture was stirred to form a sediment. The sediment was washed with water, and then dried under reduced pressure to yield a marine biodegradable polymer compound C-8.

[Example 1-9] Synthesis of marine biodegradable polymer compound C-9

To a 1000 mL recovery flask, 320 g of a 50 wt% aqueous anionic polymer compound A-1, 80 g of a 25 wt% aqueous anionic polymer compound B-1 and 80 g of a 25 wt% aqueous anionic polymer compound B-3 were added, and the resulting mixture was thoroughly stirred to homogeneity. Then, 130 g of a 30 wt% aqueous calcium chloride was added thereto, and the resulting mixture was stirred to form a sediment. The sediment was washed with water, and then dried under reduced pressure to yield a marine biodegradable polymer compound C-9.

[Comparative Example 1-1] Synthesis of marine biodegradable polymer compound X-1

To a 1000 mL recovery flask, 400 g of a 50 wt% aqueous anionic polymer compound A-2, 180 g of a 30 wt% aqueous calcium chloride was then added, and the resulting mixture was stirred to form a sediment. The sediment was washed with water, and then dried under reduced pressure to yield a marine biodegradable polymer compound X-1.

The following Table 4 collectively shows the marine biodegradable polymer compounds C-1 to C-9 and X-1.

[Table 4]

| | Polymer compound | Anionic polymer compound | | | | | | | | | | Sum of weighted averages of numerical average molecular weights | Metal ion | Metal ion equivalent (eq/10$^5$ g) |
|---|---|---|---|---|---|---|---|---|---|---|---|---|---|---|
| | | Weight ratio | | | | | | | | | | | | |
| | | A-1 | A-2 | A-3 | A-4 | A-5 | B-1 | B-2 | B-3 | B-4 | B-5 | | | |
| Example 1-1 | C-1 | 80 | - | - | - | - | 20 | - | - | - | - | 4300 | Ca | 80 |
| Example 1-2 | C-2 | - | 50 | - | - | - | - | 50 | - | - | - | 2900 | Ca | 102 |
| Example 1-3 | C-3 | - | - | 40 | - | - | - | - | 60 | - | - | 4200 | Mg | 66 |
| Example 1-4 | C-4 | - | - | - | 80 | - | 20 | - | - | - | - | 4800 | Ca | 64 |
| Example 1-5 | C-5 | - | - | - | - | 80 | 20 | - | - | - | - | 3900 | Al | 110 |
| Example 1-6 | C-6 | 40 | - | - | - | - | - | - | - | 60 | - | 3300 | Ca | 226 |
| Example 1-7 | C-7 | - | - | 30 | - | - | - | - | - | - | 70 | 4100 | Ca | 72 |
| Example 1-8 | C-8 | 60 | 20 | - | - | - | 20 | - | - | - | - | 4325 | Ca | 86 |
| Example 1-9 | C-9 | 80 | - | - | - | - | 10 | - | 10 | - | - | 3750 | Ca | 80 |
| Comparative Example 1-1 | X-1 | 100 | - | - | - | - | - | - | - | - | - | 1300 | Ca | 77 |

[5] Production of marine biodegradable resin compositions and confirmation test 1 in seawater

(1) Surface change

[Examples 2-1 to 2-9 and Comparative Examples 2-1 and 2-2]

Into PBSA (FD-92 manufactured by Mitsubishi Chemical Corporation) as a biodegradable resin, each of the marine biodegradable polymer compounds C-1 to C-9 and the polymer compound X-1 pulverized using a pulverizer (Wonder Blender WB-1 manufactured by Osaka Chemical Co., Ltd.) and classified using a stainless steel sieve (mesh size: 26 μm) was kneaded at 140°C so that the resulting mixture might have a concentration of the compound of 20 wt%, and the mixture was press-molded at 150°C to produce a film having a thickness of 200 μm (Examples 2-1 to 2-9 and Comparative Example 2-1). PBSA alone (containing no marine biodegradable polymer compound) was press-molded at 150°C to produce a film having a thickness of 200 μm (Comparative Example 2-2).

Each of the obtained films was processed into a 10 mm square piece, and the film pieces were individually placed in 200 mL of ion-exchanged water and 200 mL of seawater (collected from Tokyo Bay [Port of Chiba in Chiba Prefecture]). The film pieces were left standing at 25°C for 7 days and 30 days, then taken out, and the surface and appearance of the film pieces were observed with a scanning electron microscope. The results are shown in Table 5.

[Table 5]

| | Polymer compound | Ion-exchanged water | | Seawater | |
|---|---|---|---|---|---|
| | | 7 days | 30 days | 7 days | 30 days |
| Example 2-1 | C-1 | No change | No change | Film became uneven | Film became uneven |
| Example 2-2 | C-2 | No change | No change | Film became uneven | Film became uneven |
| Example 2-3 | C-3 | No change | No change | Film became uneven | Film became uneven |
| Example 2-4 | C-4 | No change | No change | Film became uneven | Film became uneven |
| Example 2-5 | C-5 | No change | No change | Film became uneven | Film became uneven |
| Example 2-6 | C-6 | Film became slightly uneven | Film became uneven | Film became uneven | Film became uneven |
| Example 2-7 | C-7 | No change | No change | Film became uneven | Film became uneven |
| Example 2-8 | C-8 | No change | No change | Film became uneven | Film became uneven |
| Example 2-9 | C-9 | No change | No change | Film became uneven | Film became uneven |
| Comparative Example 2-1 | X-1 | No change | No change | Film became uneven | Film became uneven |
| Comparative Example 2-2 | PBSA | No change | No change | No change | Film became slightly uneven |

From the results shown in Table 5, it is considered that concurrently with disintegration by seawater, biodegradation is promoted by the presence of microorganisms in seawater.

(2) Weight loss of composite resins

[Examples 3-1 to 3-9 and Comparative Examples 3-1 and 3-2]

In the same manner as in the item (1), films obtained by adding each of the marine biodegradable polymer compounds C-1 to C-9 and X-1 to PBSA, and a film of PBSA alone were produced. Each of the obtained films was processed into a 20 mm square piece, and the film pieces were sandwiched between stainless steel nets and immersed in seawater (collected from Tokyo Bay [Port of Chiba in Chiba Prefecture]) in a 15 L water tank. The progress of weight loss after immersion was observed after 30 days, 60 days, and 90 days. The results are shown in Table 6.

[Table 6]

| | Polymer compound | Period of immersion and percent weight loss (%) | | |
|---|---|---|---|---|
| | | 30 days | 60 days | 90 days |
| Example 3-1 | C-1 | 5 | 14 | 22 |
| Example 3-2 | C-2 | 4 | 13 | 20 |
| Example 3-3 | C-3 | 4 | 10 | 19 |
| Example 3-4 | C-4 | 4 | 11 | 18 |
| Example 3-5 | C-5 | 7 | 16 | 23 |
| Example 3-6 | C-6 | 10 | 18 | 22 |
| Example 3-7 | C-7 | 3 | 12 | 25 |
| Example 3-8 | C-8 | 6 | 16 | 24 |
| Example 3-9 | C-9 | 4 | 12 | 20 |
| Comparative Example 3-1 | X-1 | 6 | 15 | 24 |
| Comparative Example 3-2 | PBSA | 0.1 | 1 | 8 |

From the results shown in Table 6, it is considered that concurrently with disintegration by seawater, biodegradation is promoted by the presence of microorganisms in seawater.

(3) Measurement of tensile strength

[Examples 4-1 to 4-9 and Comparative Example 4-1]

In the same manner as in the item (1), films obtained by adding each of the marine biodegradable polymer compounds C-1 to C-9 and X-1 to PBSA so that the resulting mixtures might have a concentration of 10 wt%, 20 wt%, or 30 wt%, and a film of PBSA alone were produced. According to JIS K 7139-A22, dumbbells were produced from the films, and the tensile stress (yield point) was measured using a universal tester (MCT-2150 manufactured by A&D CO., LTD.). The tensile stress was measured five times for each sample, and the average value thereof was taken as the tensile stress. The results are shown in Table 7.

[Table 7]

| | Polymer compound | Tensile strength (MPa) relative to amount added (%) Main resin: PBSA [Number in parenthesis is relative value with respect to main resin] | | | |
|---|---|---|---|---|---|
| | | 0% | 10% | 20% | 30% |
| Example 4-1 | C-1 | | 12.7 (99) | 12.0 (94) | 11.2 (88) |
| Example 4-2 | C-2 | | 12.8 (100) | 12.2 (95) | 11.4 (89) |
| Example 4-3 | C-3 | | 13.0 (102) | 12.4 (97) | 11.6 (91) |
| Example 4-4 | C-4 | | 13.1 (102) | 12.6 (98) | 11.6 (91) |
| Example 4-5 | C-5 | 12.8 (100) | 12.6 (98) | 11.9 (93) | 11.1 (87) |
| Example 4-6 | C-6 | | 12.8 (100) | 12.2 (95) | 11.2 (88) |
| Example 4-7 | C-7 | | 12.9 (101) | 12.4 (97) | 11.5 (90) |
| Example 4-8 | C-8 | | 12.7 (99) | 12.2 (95) | 11.2 (88) |
| Example 4-9 | C-9 | | 12.8 (100) | 12.2 (95) | 11.3 (88) |

(continued)

| | Polymer compound | Tensile strength (MPa) relative to amount added (%) Main resin: PBSA [Number in parenthesis is relative value with respect to main resin] | | | |
|---|---|---|---|---|---|
| | | 0% | 10% | 20% | 30% |
| Comparative Example 4-1 | X-1 | | 12.5 (98) | 11.3 (88) | 9.8 (77) |

From the results shown in Table 7, it is confirmed that the marine biodegradable polymer compound of the present invention has improved mechanical properties as compared to X-1.

(4) Measurement of softening point

[Examples 5-1 to 5-9 and Comparative Example 5-1]

In the same manner as in the item (1), films obtained by adding each of the marine biodegradable polymer compounds C-1 to C-9 and X-1 to PBSA so that the resulting mixtures might have a concentration of 10 wt%, 20 wt%, or 30 wt%, and a film of PBSA alone were produced. The softening points of the marine biodegradable polymer compounds C-1 to C-9 and X-1 were measured using a thermomechanical analyzer (TMA4000SE manufactured by NETZSCH Japan K.K.). Specifically, while a test piece having a thickness of 200 $\mu$m, a length of 150 mm and a width of 3 mm was pulled by a weight of 10 g, the temperature at which the test piece was observed to elongate by 1 mm in a temperature range from 0°C to 180°C (temperature rising rate 3°C/min) was identified as a softening point. The results are shown in Table 8.

[Table 8]

| | Polymer compound | Softening point (°C) relative to amount added (%) Main resin: PBSA | | | |
|---|---|---|---|---|---|
| | | 0% | 10% | 20% | 30% |
| Example 5-1 | C-1 | 89.5 | 89.0 | 88.5 | 88 |
| Example 5-2 | C-2 | | 88.7 | 88.3 | 88.0 |
| Example 5-3 | C-3 | | 89.1 | 88.6 | 88.1 |
| Example 5-4 | C-4 | | 90.0 | 89.6 | 89.0 |
| Example 5-5 | C-5 | | 85.1 | 83.2 | 81.1 |
| Example 5-6 | C-6 | | 89.8 | 89.1 | 88.5 |
| Example 5-7 | C-7 | | 84.1 | 82.5 | 80.8 |
| Example 5-8 | C-8 | | 88.9 | 88.3 | 87.8 |
| Example 5-9 | C-9 | | 88.6 | 88.0 | 87.6 |
| Comparative Example 5-1 | X-1 | | 80.5 | 72.4 | 65.3 |

From the results shown in Table 8, it is confirmed that the marine biodegradable polymer compound of the present invention has improved thermal properties as compared to X-1.

[6] Production of marine biodegradable resin compositions and confirmation test 2 in seawater

(1) Surface change

[Examples 6-1 to 6-9 and Comparative Examples 6-1 to 6-2]

Into a starch-based resin (Mater-Bi EF05B manufactured by Novamont S.p.A.) as a biodegradable resin, each of the marine biodegradable polymer compounds C-1 to C-9 and the polymer compound X-1 pulverized using a pulverizer (Wonder Blender WB-1 manufactured by Osaka Chemical Co., Ltd.) and classified using a stainless steel sieve (mesh size: 26 $\mu$m) was kneaded at 140°C so that the resulting mixture might have a concentration of the compound of 20 wt%, and the mixture was press-molded at 150°C to produce a film having a thickness of 200 $\mu$m (Examples 6-1 to 6-9 and Comparative Example 6-1). The starch-based resin alone (containing no marine biodegradable polymer compound) was press-molded at 150°C to produce a film having a thickness of 200 $\mu$m (Comparative Example 6-2).

Each of the obtained films was processed into a 10 mm square piece, and the film pieces were individually placed in 200 mL of ion-exchanged water and 200 mL of seawater (collected from Tokyo Bay [Port of Chiba in Chiba Prefecture]). The film pieces were left standing at 25°C for 7 days and 30 days, then taken out, and the surface and appearance of the film pieces were observed with a scanning electron microscope. The results are shown in Table 9.

[Table 9]

| | Polymer compound | Ion-exchanged water | | Seawater | |
|---|---|---|---|---|---|
| | | 7 days | 30 days | 7 days | 30 days |
| Example 6-1 | C-1 | No change | No change | Film became uneven | Film became uneven |
| Example 6-2 | C-2 | No change | No change | Film became uneven | Film became uneven |
| Example 6-3 | C-3 | No change | No change | Film became uneven | Film became uneven |
| Example 6-4 | C-4 | No change | No change | Film became uneven | Film became uneven |
| Example 6-5 | C-5 | No change | No change | Film became uneven | Film became uneven |
| Example 6-6 | C-6 | Film became slightly uneven | Film became uneven | Film became uneven | Film became uneven |
| Example 6-7 | C-7 | No change | No change | Film became uneven | Film became uneven |
| Example 6-8 | C-8 | No change | No change | Film became uneven | Film became uneven |
| Example 6-9 | C-9 | No change | No change | Film became uneven | Film became uneven |
| Comparative Example 6-1 | X-1 | No change | No change | Film became uneven | Film became uneven |
| Comparative Example 6-2 | Starch-based resin | No change | No change | No change | Film became slightly uneven |

From the results shown in Table 9, it is considered that concurrently with disintegration by seawater, biodegradation is promoted by the presence of microorganisms in seawater.

(2) Weight loss of composite resins

[Examples 7-1 to 7-9 and Comparative Examples 7-1 and 7-2]

In the same manner as in the item (1), films obtained by adding each of the marine biodegradable polymer compounds C-1 to C-9 and X-1 to a starch-based resin, and a film of a starch-based resin alone were produced. Each of the obtained films was processed into a 20 mm square piece, and the film pieces were sandwiched between stainless steel nets and immersed in seawater (collected from Tokyo Bay [Port of Chiba in Chiba Prefecture]) in a 15 L water tank. The progress of weight loss after immersion was observed after 30 days, 60 days, and 90 days. The results are shown in Table 10.

[Table 10]

| | Polymer compound | Period of immersion and percent weight loss (%) | | |
|---|---|---|---|---|
| | | 30 days | 60 days | 90 days |
| Example 7-1 | C-1 | 16 | 33 | 45 |
| Example 7-2 | C-2 | 15 | 32 | 46 |

(continued)

| | Polymer compound | Period of immersion and percent weight loss (%) | | |
|---|---|---|---|---|
| | | 30 days | 60 days | 90 days |
| Example 7-3 | C-3 | 12 | 25 | 34 |
| Example 7-4 | C-4 | 10 | 24 | 35 |
| Example 7-5 | C-5 | 14 | 31 | 44 |
| Example 7-6 | C-6 | 21 | 40 | 55 |
| Example 7-7 | C-7 | 13 | 27 | 39 |
| Example 7-8 | C-8 | 15 | 30 | 45 |
| Example 7-9 | C-9 | 14 | 28 | 40 |
| Comparative Example 7-1 | X-1 | 16 | 33 | 48 |
| Comparative Example 7-2 | Starch-based resin | 10 | 20 | 24 |

From the results shown in Table 10, it is considered that concurrently with disintegration by seawater, biodegradation is promoted by the presence of microorganisms in seawater.

(3) Measurement of tensile strength

[Examples 8-1 to 8-9 and Comparative Example 8-1]

In the same manner as in the item (1), films obtained by adding each of the marine biodegradable polymer compounds C-1 to C-9 and X-1 to a starch-based resin so that the resulting mixtures might have a concentration of 10 wt%, 20 wt%, or 30 wt%, and a film of a starch-based resin alone were produced.

According to JIS K 7139-A22, dumbbells were produced from the films, and the tensile stress (yield point) was measured using a universal tester (MCT-2150 manufactured by A&D CO., LTD.). The tensile stress was measured five times for each sample, and the average value thereof was taken as the tensile stress. The results are shown in Table 11.

[Table 11]

| | Polymer compound | Tensile strength (MPa) relative to amount added (%) Main resin: Mater-Bi [Number in parenthesis is relative value with respect to main resin] | | | |
|---|---|---|---|---|---|
| | | 0% | 10% | 20% | 30% |
| Example 8-1 | C-1 | 8.8 (100) | 8.9 (101) | 8.1 (92) | 7.5 (85) |
| Example 8-2 | C-2 | | 8.8 (100) | 8.0 (91) | 7.6 (86) |
| Example 8-3 | C-3 | | 9.0 (102) | 8.3 (94) | 7.8 (89) |
| Example 8-4 | C-4 | | 8.9 (101) | 7.9 (90) | 7.3 (83) |
| Example 8-5 | C-5 | | 8.5 (97) | 7.7 (88) | 7.1 (81) |
| Example 8-6 | C-6 | | 8.5 (97) | 7.9 (90) | 7.4 (84) |
| Example 8-7 | C-7 | | 9.1 (103) | 8.4 (95) | 8.0 (91) |
| Example 8-8 | C-8 | | 8.6 (98) | 7.8 (89) | 7.3 (83) |
| Example 8-9 | C-9 | | 8.6 (98) | 7.9 (90) | 7.3 (83) |
| Comparative Example 8-1 | X-1 | | 8.3 (94) | 7.4 (84) | 6.3 (72) |

From the results shown in Table 11, it is confirmed that the marine biodegradable polymer compound of the present invention has improved mechanical properties as compared to X-1.

(4) Measurement of softening point

[Examples 9-1 to 9-9 and Comparative Example 9-1]

In the same manner as in the item (1), films obtained by adding each of the marine biodegradable polymer compounds C-1 to C-9 and X-1 to a starch-based resin so that the resulting mixtures might have a concentration of 10 wt%, 20 wt%, or 30 wt%, and a film of a starch-based resin alone were produced. The softening points of the marine biodegradable polymer compounds C-1 to C-9 and X-1 were measured using a thermomechanical analyzer (TMA 4000SE manufactured by NETZSCH Japan K.K.). Specifically, while a test piece having a thickness of 200 $\mu$m, a length of 150 mm and a width of 3 mm was pulled by a weight of 10 g, the temperature at which the test piece was observed to elongate by 1 mm in a temperature range from 0°C to 180°C (temperature rising rate 3°C/min) was identified as a softening point. The results are shown in Table 12.

[Table 12]

| | Polymer compound | Softening point (°C) relative to amount added (%) Main resin: Mater-Bi | | | |
| --- | --- | --- | --- | --- | --- |
| | | 0% | 10% | 20% | 30% |
| Example 9-1 | C-1 | 117.0 | 115.2 | 113.1 | 111.6 |
| Example 9-2 | C-2 | | 115.0 | 112.8 | 112.0 |
| Example 9-3 | C-3 | | 116.2 | 115.3 | 114.7 |
| Example 9-4 | C-4 | | 116.6 | 115.7 | 115.0 |
| Example 9-5 | C-5 | | 112.2 | 110.6 | 108.2 |
| Example 9-6 | C-6 | | 116.9 | 115.9 | 115.1 |
| Example 9-7 | C-7 | | 111.6 | 109.3 | 106.4 |
| Example 9-8 | C-8 | | 115.7 | 113.3 | 112.1 |
| Example 9-9 | C-9 | | 116.0 | 115.1 | 114.4 |
| Comparative Example 9-1 | X-1 | | 110.8 | 108.1 | 90.2 |

From the results shown in Table 12, it is confirmed that the marine biodegradable polymer compound of the present invention has improved thermal properties as compared to X-1.

As can be understood from the above-mentioned results, in seawater, the marine biodegradable polymer compound of the present invention is reduced in molecular weight by biodegradation prior to the biodegradable resin, or subjected to salt substitution, so that the marine biodegradable polymer compound is easily dissolved or exhibits hydrophilicity. Therefore, when the marine biodegradation promoter containing the marine biodegradable polymer compound of the present invention is added to a resin composition having biodegradability in soil or compost or a resin composition having weak biodegradability in the ocean, it becomes possible to make the resin composition have an uneven shape in seawater, to assist adhesion of microorganisms, and to promote biodegradation. As a result, it becomes possible to improve the overall marine biodegradability and to reduce the environmental load. A combination of the marine biodegradation promoter containing the marine biodegradable polymer compound of the present invention with a resin having biodegradability in soil or compost can improve seawater biodegradability. In addition, appropriately changing the structure of an organic anion can exert a plurality of effects: adjustment of the melting temperature and melt viscosity, adjustment of the crystallinity, adjustment of adhesion of microorganisms and biodegradability, adjustment of physical properties such as the tensile strength, flexural strength, and elasticity of the resin, improvement of compatibility with the resin, adjustment of hydrophobicity, adjustment of hydrophobization, adhesive properties, and adjustment of plasticity, and improvement can be achieved in terms of both the biodegradability and physical properties of the marine biodegradable resin composition.

**Claims**

**1.** A marine biodegradable polymer compound in which an anionic polymer compound A which has a total of two or more monovalent anionic groups at a terminal of a main chain and no ionic group in a side chain and in which the main chain is linear or branched and an anionic polymer compound B having a monovalent anionic group in side chains of two or more repeat units are bonded via a divalent or higher-valent metal cation.

2. The polymer compound according to claim 1, wherein a weight ratio of the anionic polymer compound A to the anionic polymer compound B is 99 : 1 to 10 : 90.

3. The polymer compound according to claim 1, wherein the main chain of the anionic polymer compound A is linear.

4. The polymer compound according to claim 1, wherein the anionic polymer compound B contains a repeat unit having no ionic group.

5. The polymer compound according to claim 1, wherein the anionic polymer compound B has an aliphatic unsaturated carbon-carbon bond in a main chain thereof.

6. The polymer compound according to claim 1, wherein the monovalent anionic group of the anionic polymer compound A is a carboxylate anion.

7. The polymer compound according to claim 1, wherein the monovalent anionic group of the anionic polymer compound B is a carboxylate anion or a sulfonate anion.

8. The polymer compound according to claim 1, wherein the monovalent anionic group of the anionic polymer compound B is bonded to a ring.

9. The polymer compound according to claim 1, wherein a number average molecular weight of the anionic polymer compound A is 500 to 10,000, and a number average molecular weight of the anionic polymer compound B is 500 to 10,000.

10. The polymer compound according to claim 1, wherein the anionic polymer compound A is a compound in which repeat units are bonded by at least one bond selected from an ester bond, an amide bond, an ether bond and a urethane bond, and the anionic polymer compound B is a compound in which repeat units are bonded by at least one bond selected from an ester bond, an amide bond, an ether bond and a urethane bond.

11. The polymer compound according to claim 1, wherein a value obtained by dividing the number average molecular weight of the anionic polymer compound B by an average number of monovalent anionic groups in one molecule is 100 to 5,000.

12. The polymer compound according to claim 1, wherein a content of the divalent or higher-valent metal cation is 1 to 300 eq/$10^5$ g.

13. The polymer compound according to claim 1, wherein the divalent or higher-valent metal cation is a calcium ion, a magnesium ion, or an aluminum ion.

14. A marine biodegradation promoter comprising the marine biodegradable polymer compound according to any one of claims 1 to 13.

15. A marine biodegradable resin composition comprising the marine biodegradation promoter according to claim 14 and a resin.

16. The marine biodegradable resin composition according to claim 15, wherein the resin is a biodegradable resin.

17. The marine biodegradable resin composition according to claim 15, having a content of the marine biodegradation promoter of 1 to 50 wt%, and a content of the resin of 50 to 99 wt%.

18. A molded body obtained from the marine biodegradable resin composition according to claim 15.

19. A method for producing a marine biodegradable polymer compound, the method comprising a step of cross-linking an anionic polymer compound A which has a total of two or more monovalent anionic groups at a terminal of a main chain and no ionic group in a side chain and in which the main chain is linear or branched and an anionic polymer compound B having a monovalent anionic group in side chains of two or more repeat units, by a divalent or higher-valent metal cation.

**EP 4 786 525 A1**

## INTERNATIONAL SEARCH REPORT

International application No.

**PCT/JP2024/030834**

### A. CLASSIFICATION OF SUBJECT MATTER

*C08G 81/00*(2006.01)i; *C08G 63/688*(2006.01)i; *C08K 3/16*(2006.01)i; *C08K 3/105*(2018.01)i; *C08L 67/00*(2006.01)i; *C08L 71/00*(2006.01)i; *C08L 75/04*(2006.01)i; *C08L 77/00*(2006.01)i; *C08L 101/00*(2006.01)i; *C08L 101/02*(2006.01)i; *C08L 101/16*(2006.01)n

FI: C08G81/00; C08L67/00; C08L77/00; C08L75/04; C08L71/00; C08L101/00; C08K3/16; C08K3/105; C08G63/688; C08L101/02 ZBP; C08L101/16

According to International Patent Classification (IPC) or to both national classification and IPC

### B. FIELDS SEARCHED

Minimum documentation searched (classification system followed by classification symbols)

C08G81/00; C08G63/688; C08K3/16; C08K3/105; C08L67/00; C08L71/00; C08L75/04; C08L77/00; C08L101/00; C08L101/02; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2010-202714 A (SANYO CHEMICAL INDUSTRIES, LTD.) 16 September 2010 (2010-09-16)<br>production examples 1, 6 | 1-19 |
| A | WO 2023/100260 A1 (NISSHINBO HOLDINGS INC.) 08 June 2023 (2023-06-08)<br>entire text | 1-19 |
| A | JP 2013-221047 A (UNITIKA LTD.) 28 October 2013 (2013-10-28)<br>entire text | 1-19 |
| A | WO 2021/069963 A1 (MAIKAP, Akshay Narayan) 15 April 2021 (2021-04-15)<br>entire text | 1-19 |
| A | JP 2011-132328 A (TOYO BOSEKI KABUSHIKI KAISHA) 07 July 2011 (2011-07-07)<br>entire text | 1-19 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/030834**

| Patent document cited in search report | | | Publication date (day/month/year) | Patent family member(s) | | | Publication date (day/month/year) |
|---|---|---|---|---|---|---|---|
| JP | 2010-202714 | A | 16 September 2010 | (Family: none) | | | |
| WO | 2023/100260 | A1 | 08 June 2023 | CN | 118317993 | A | |
| JP | 2013-221047 | A | 28 October 2013 | (Family: none) | | | |
| WO | 2021/069963 | A1 | 15 April 2021 | US | 2023/0348752 | A1 | |
| JP | 2011-132328 | A | 07 July 2011 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021191810 A

**Non-patent literature cited in the description**

- **HIDESHIGE TAKADA**. A Look at the Status of Microplastic Pollution Trends and Possible Solution Frameworks. *Journal of the Japan Society of Material Cycles and Waste Management*, 2018, vol. 29 (4), 261-269

- **AKIRA EBISUI**. Degradation of Biodegradable Plastics in Seawater. *Fisheries Engineering*, 2003, vol. 40 (2), 143-149